# EUROPEAN PATENT SPECIFICATION

(11) **EP 3 798 265 B1**
(45) Date of publication and mention of the grant of the patent: **17.09.2025**
(21) Application number: 19200433.1
(22) Date of filing: 30.09.2019
(51) Int. Cl.: C08L 69/00, C08K 5/49, C08K 7/14

(54) **GLASS-FILLED FLAME RETARDANT POLYCARBONATE COMPOSITIONS AND THIN-WALLED ARTICLES THEREOF**
GLASGEFÜLLTE FLAMMHEMMENDE POLYCARBONATZUSAMMENSETZUNGEN UND DÜNNWANDIGE ARTIKEL DARAUS
COMPOSITIONS DE POLYCARBONATE IGNIFUGES REMPLIES DE VERRE ET ARTICLES À PAROI MINCE CORRESPONDANTS

(43) Date of publication of application: 31.03.2021
(73) Proprietor: SHPP Global Technologies B.V., 4612 PX Bergen op Zoom (NL)
(72) Inventor: FARREL, Tony, 4612 PX Bergen op Zoom (NL); SCHWARTZ, Eric, 4612 PX Bergen op Zoom (NL); TER HORST, Sascha Jan, 4612 PX Bergen op Zoom (NL); VAN DER MEE, Mark Adrianus Johannes, 4612 PX Bergen op Zoom (NL); GOOSSENS, Johannes Martinus Dina, 4612 PX Bergen op Zoom (NL); VAN DE GRAMPEL, Robert Dirk, 4612 PX Bergen op Zoom (NL)
(74) Representative: Balder IP Law, S.L.

(56) References cited:
- WO-A1-2013/067684
- WO-A1-2017/203480

## Description

### BACKGROUND

This disclosure relates to polycarbonate compositions, and in particular to glass-filled polycarbonate compositions, methods of manufacture, and uses thereof.

Polycarbonates are useful in the manufacture of articles and components for a wide range of applications, from automotive parts to electronic appliances. Glass-filled polycarbonate compositions, i.e., polycarbonate compositions comprising fibrous fillers, can provide additional strength and other advantageous properties. Because of their broad use, particularly in electronics, it is desirable to provide glass-filled polycarbonate compositions with improved heat resistance.

WO 2017/203480 discloses polycarbonate compositions comprising a polycarbonate homopolymer, a high heat polycarbonate copolymer, a poly(carbonate-siloxane), a flame retardant salt, and glass fibers comprising poly(phthalate-carbonate). However, these known compositions, such as the ones disclosed in Examples 29-31 thereof which have 0.2-0.5 wt.% phosphazene as phosphorus-containing flame retardant, typically have a very low content of added phosphorus, *i.e.,* 0.017-0.026 wt.% added phosphorus.

There accordingly remains a need in the art for glass-filled polycarbonate compositions having high heat resistance. It would be a further advantage if the compositions had improved flammability ratings at very low thicknesses.

### BRIEF DESCRIPTION

The above-described and other deficiencies of the art are met by a glass-filled polycarbonate composition comprising: 5 to 95 wt% of a high heat copolycarbonate component having a glass transition temperature of 170 °C or higher as determined per ASTM D3418 with a 20 °C/min heating rate; a phosphorous-containing flame retardant present in an amount effective to provide about 0.2 to 0.9 wt% of added phosphorous, based on the total weight of the phosphorous-containing flame retardant; 5 to 45 wt% of glass fibers; optionally, 5 to 50 wt% of a homopolycarbonate having a weight average molecular weight from 15,000 to 40,000 grams/mole, as measured via gel permeation chromatography using bisphenol A homopolycarbonate standards; optionally, 5 to 45 wt% of a poly(carbonate-siloxane); optionally, 0.1 to 0.97 wt% of an anti-drip agent; optionally, 0.1-10 wt% of an additive composition, and wherein each amount is based on the total weight of the glass-filled polycarbonate composition, which sums to 100 wt%; wherein a molded sample of the glass-filled polycarbonate composition has a Vicat softening temperature of greater than or equal to 135 °C as measured according to ISO 306, and a flame test rating of V0 as measured according to UL-94 at a thickness of 1.0 millimeter, preferably 0.8 millimeter, or preferably 0.4 millimeter.

In another aspect, not encompassed by the wording of the claims, a method of manufacture comprises combining the above-described components to form a glass-filled polycarbonate composition.

In yet another aspect, an article comprises the above-described glass-filled polycarbonate composition.

In still another aspect, a method of manufacture of an article comprises molding, extruding, or shaping the above-described glass-filled polycarbonate composition into an article.

The above described and other features are exemplified by the following drawings, detailed description, examples, and claims.

### DETAILED DESCRIPTION

There is a need for thin-walled articles made from glass-filled, flame retardant polycarbonate compositions having high heat resistance, while maintaining other properties such as impact and relative temperature index (RTI). In particular, compositions for thin-walled compositions are needed having a Vicat softening temperature (Vicat) of at least 135 °C and a UL-94 flammability rating of V0 at 0.8 millimeter (mm). In addition, there is an increasing demand for more environmentally friendly polycarbonate compositions without bromine and chlorine. Some commercially available chlorine-free and bromine-free polycarbonate compositions that include flame retardants such as Rimar salt or poly(tetrafluoroethylene) have good heat resistance and impact properties; but do not possess adequate flammability ratings at low thicknesses, less than 1 millimeter (mm), for example. Other commercially available polycarbonate compositions that include chlorine-free and bromine-free flame retardants possess good flammability ratings at low thicknesses, but these materials have insufficient heat resistance for some high heat applications. For example, it is known that phosphonate and phosphazene flame retardants can decrease the heat resistance of polycarbonate compositions.

Surprisingly and unexpectedly, the inventors hereof have discovered glass-filled polycarbonate compositions according to claim 1, having high heat resistance, flammability ratings of V0 at a thickness of 0.8 mm and good impact properties. These compositions comprise a high heat copolycarbonate component having a glass transition temperature of 170 °C or higher as determined per ASTM D3418 with a 20 °C/min heating rate, a phosphorous-containing flame retardant, and glass fibers. The compositions can further include a homopolycarbonate and/or a poly(carbonate-siloxane).

The individual components of the glass-filled polycarbonate compositions are described in further detail below.

"Polycarbonate" as used herein means a polymer having repeating structural carbonate units of formula (1) 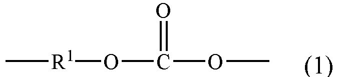 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of the formula

HO-A¹-Y¹-A²-OH

wherein each of A¹ and A² is a monocyclic divalent aromatic group and Y¹ is a single bond or a bridging group having one or more atoms that separate A¹ from A². In an aspect, one atom separates A¹ from A². Specifically, each R¹ can be derived from a bisphenol of formula (2) 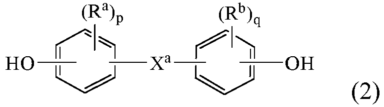 wherein R^{a} and R^{b} are each independently a halogen, C₁₋₁₂ alkoxy, or C₁₋₁₂ alkyl, and p and q are each independently integers of 0-4. It will be understood that when p or q is less than 4, the valence of each carbon of the ring is filled by hydrogen. Also in formula (2), X^{a} is a C₁₋₆₀ bridging group connecting the two hydroxy-substituted aromatic groups, where the bridging group and the hydroxy substituent of each C₆ arylene group are disposed ortho, meta, or para (specifically para) to each other on the C₆ arylene group. In an aspect, the bridging group X^{a} is single bond, -O-, -S-, -S(O)-, -S(O)₂-, -C(O)-, or a C₁₋₆₀ organic group. The C₁₋₆₀ organic bridging group can be cyclic or acyclic, aromatic or non-aromatic, and can further comprise heteroatoms such as halogens, oxygen, nitrogen, sulfur, silicon, or phosphorous. The C₁₋₆₀ organic group can be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, specifically methyl, disposed meta to the hydroxy group on each arylene group. Some illustrative examples of dihydroxy compounds that can be used are described, for example, in WO 2013/175448 A1, US 2014/0295363, and WO 2014/072923. Bisphenol A can be specifically mentioned.

The polycarbonates in the glass-filled polycarbonate compositions include a high heat copolycarbonate component and can include a homopolycarbonate (wherein each R¹ in the polymer is the same) and a poly(carbonate-siloxane). In an aspect, he homopolycarbonate in the glass-filled composition is derived from a bisphenol of formula (2), preferably bisphenol A, in which each of A¹ and A² is p-phenylene and Y¹ is isopropylidene in formula (2). When present, the homopolycarbonate is 5-50 wt%, 5-40 wt%, 5-30 wt%, 10-50 wt%, 10-40 wt%, 10-30 wt%, 10-20 wt%, 15-50 wt%, 15-40 wt%, 15-30 wt%, 20-50 wt%, 20-40 wt%, 20-30 wt%, 30-50 wt%, 30-40 wt%, or 40-50 wt% of the composition, based on the total weight of the composition. The homopolycarbonate can have an intrinsic viscosity, as determined in chloroform at 25°C, of 0.3-1.5 deciliters per gram (dl/gm), preferably 0.45-1.0 dl/gm. The homopolycarbonate can have a weight average molecular weight (Mw) of 15,000 to 40,000 grams per mol (g/mol), preferably 20,000-100,000 g/mol, as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute. In some aspects, the homopolycarbonate is a bisphenol A homopolycarbonate having an Mw of 18,000-35,000 grams/mole, preferably 20,000-25,000 g/mol; or a bisphenol A homopolycarbonate having a weight average molecular weight of 25,000-35,000 g/mol, preferably 27,000-32,000 g/mol; or a combination thereof, each as measured as described above. The high heat copolycarbonate component may comprise a poly(carbonate-bisphenol phthalate ester) comprising 1-50 wt% of aromatic carbonate units and 50-99 wt% of bisphenol phthalate ester units, each based on the sum of the weight of the carbonate units and the bisphenol phthalate ester units; or a high heat copolycarbonate comprising high heat aromatic carbonate units derived from 1,1-bis(4-hydroxyphenyl)-3,3,5-trimethyl-cyclohexane, N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, preferably 1,1-bis(4-hydroxyphenyl)-3,3,5-trimethylcyclohexane, N-phenyl phenolphthalein bisphenol, or a combination thereof, and optionally, low heat aromatic carbonate units, preferably bisphenol A carbonate units; or a combination thereof. The glass-filled polycarbonate composition may comprise 80 to 90 wt% of the poly(bisphenol A carbonate-bisphenol A phthalate ester) as the copolycarbonate component, wherein the weight ratio of carbonate units to ester units is 75:25-85:15; 5 to 15 wt% of the glass fibers; 0.1 to 2.0 wt% of the additive composition, the phosphorous-containing flame retardant is present in an amount effective to provide 0.3 to 0.7 wt% of added phosphorous, based on the total weight of the phosphorous-containing flame retardant, optionally, 0.1 to 0.97 wt% of an anti-drip agent; and wherein each amount is based on the total weight of the glass-filled polycarbonate composition, which sums to 100 wt%. In another aspect, the glass-filled polycarbonate composition may comprise 20 to 40 wt% of the high heat copolycarbonate as the high heat copolycarbonate component, wherein the high heat copolycarbonate comprises units derived from 1,1-bis(4-hydroxyphenyl)-3,3,5-trimethyl-cyclohexane, N-phenyl phenolphthalein bisphenol, or a combination thereof; 10 to 20 wt% of the poly(carbonate-siloxane); 5 to 50 wt% of bisphenol A homopolycarbonate as the homopolycarbonate, having a weight average molecular weight from 18,000-35,000 grams/mole, preferably 20,000-25,000 grams/mole; 10 to 40 wt% of the glass fibers as the reinforcing filler; the phosphorous-containing flame retardant which is present in an amount effective to provide 0.3 to 0.7 wt% of added phosphorous, based on the total weight of the phosphorous-containing flame retardant; 0.1 to 2.0 wt% of the additive composition; optionally, 0.1 to 0.97 wt% of an anti-drip agent, wherein each amount is based on the total weight of the glass-filled polycarbonate composition, which sums to 100 wt%. In still another aspect, the glass-filled polycarbonate composition may comprise 30 to 50 wt% of the poly(bisphenol A carbonate-bisphenol A phthalate ester) as the high heat copolycarbonate component, wherein the weight ratio of carbonate units to ester units is 75:25-85:15; 10 to 20 wt% of the poly(carbonate-siloxane);5 to 40 wt% of bisphenol A homopolycarbonate having a weight average molecular weight from 18,000-35,000 grams/mole, preferably 20,000-25,000 grams/mole, as measured via gel permeation chromatography using bisphenol A homopolycarbonate standards; 10 to 40 wt% of the glass fibers; 0.1 to 2.0 wt% of the additive composition; the phosphorous-containing flame retardant which is present in an amount effective to provide 0.3 to 0.7 wt% of added phosphorous, based on the total weight of the phosphorous-containing flame retardant; optionally, 0.1 to 0.97 wt% of an anti-drip agent, wherein each amount is based on the total weight of the glass-filled polycarbonate composition, which sums to 100 wt%, wherein the phosphorous-containing flame retardant is of the formula (17a) wherein m is 1 or 2, and q is 1 to 5 or, alternatively, the phosphorous-containing flame retardant is a phosphazene of the formula 19, 21 or a combination thereof, wherein w1 is 3 to 10,000, w2 is 3 to 25, preferably 3 to 7, and each R^{w} is independently a C₁₋₁₂ alkyl, C₂₋₁₂ alkenyl, C₁₋₁₂ alkoxy, C₆₋₁₂ aryl, C₆₋₁₂ aryloxy, or polyoxy(C₁₋₆ alkylene) group.

"Polycarbonates" includes homopolycarbonates (wherein each R¹ in the polymer is the same), copolymers comprising different R¹ moieties in the carbonate ("copolycarbonates"), and copolymers comprising carbonate units and other types of polymer units, such as ester units or siloxane units.

The glass-filled polycarbonate compositions include a high heat copolycarbonate component, which as used herein means a polycarbonate having a glass transition temperature of at least (Tg) of 170 °C, or 170 to 250 °C, as determined per ASTM D3418 with a 20 °C/min heating rate. The high heat copolycarbonate component can include an aromatic poly(ester-carbonate). Such polycarbonates further contain, in addition to recurring carbonate units of formula (1), repeating ester units of formula (3) 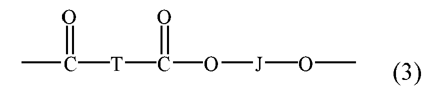 wherein J is a divalent group derived from an aromatic dihydroxy compound (including a reactive derivative thereof), such as a bisphenol of formula (2), e.g., bisphenol A; and T is a divalent group derived from an aromatic dicarboxylic acid (including a reactive derivative thereof), preferably isophthalic or terephthalic acid wherein the weight ratio of isophthalic acid to terephthalic acid is 91:9 to 2:98. Copolyesters containing a combination of different T or J groups can be used. The polyester units can be branched or linear.

In an aspect, J is derived from a bisphenol of formula (2), e.g., bisphenol A. In another aspect, J is derived from an aromatic dihydroxy compound, e.g, resorcinol. A portion of the groups J, for example up to 20 mole percent (mol%) can be a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. Preferably, all J groups are aromatic.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, or a combination thereof. A specific dicarboxylic acid comprises a combination of isophthalic acid and terephthalic acid wherein the weight ratio of isophthalic acid to terephthalic acid is 91:9 to 2:98. A portion of the groups T, for example up to 20 mol%, can be aliphatic, for example derived from 1,4-cyclohexane dicarboxylic acid. Preferably all T groups are aromatic.

The molar ratio of ester units to carbonate units in the polycarbonates can vary broadly, for example 1:99 to 99:1, preferably 10:90 to 90: 10, more preferably 25:75 to 75:25, or 2:98 to 15:85, depending on the desired properties of the final composition.

Specific poly(ester-carbonate)s are those including bisphenol A carbonate units and isophthalate/terephthalate-bisphenol A ester units, i.e., a poly(bisphenol A carbonate)-co-(bisphenol A-phthalate-ester) of formula (4a) 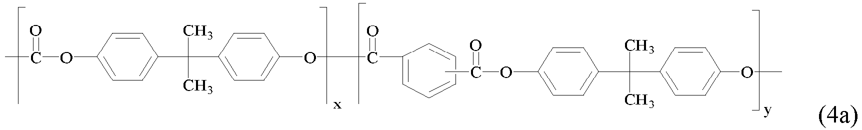 wherein x and y represent the weight percent of bisphenol A carbonate units and isophthalate/terephthalate -bisphenol A ester units, respectively. Generally, the units are present as blocks. In an aspect, the weight ratio of carbonate units x to ester units y in the polycarbonates is 1:99 to 50:50, or 5:95 to 25:75, or 10:90 to 45:55. In another aspect, the weight ratio of carbonate units x to ester units y in the poly(bisphenol A carbonate)-co-(bisphenol A-phthalate-ester) of formula (4a) may be 10:90-45:55, preferably 75:25-85:15, and the ester units may have a molar ratio of isophthalate to terephthalate from 98:2-88:12. Copolymers of formula (5) comprising 35-45 wt% of carbonate units and 55-65 wt% of ester units, wherein the ester units have a molar ratio of isophthalate to terephthalate of 45:55 to 55:45 are often referred to as poly(carbonate-ester)s (PCE). Copolymers comprising 15-25 wt% of carbonate units and 75-85 wt% of ester units. wherein the ester units have a molar ratio of isophthalate to terephthalate from 98:2 to 88:12 are often referred to as poly(phthalate-carbonate)s (PPC).

In another aspect, the high heat poly(ester-carbonate) is a poly(carbonate-co-monoarylate ester) of formula (4b) that includes aromatic carbonate units (1) and repeating monoarylate ester units 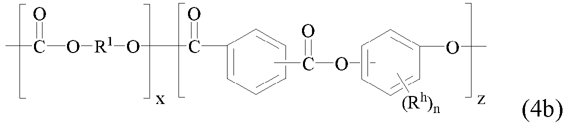 wherein R¹ is as defined in formula (1), and each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0-4. Preferably, each R^{h} is independently a C₁₋₄ alkyl, and n is 0-3, 0-1, or 0. The mole ratio of carbonate units x to ester units z can be from 99:1 to 1:99, or from 98:2 to 2:98, or from 90:10 to 10:90. In an aspect the mole ratio of x:z is from 50:50 to 99:1, or from 1:99 to 50:50.

In an aspect, the high heat poly(ester-carbonate) comprises aromatic ester units and monoarylate ester units derived from the reaction of a combination of isophthalic and terephthalic diacids (or a reactive derivative thereof) with resorcinol (or a reactive derivative thereof) to provide isophthalate/terephthalate-resorcinol ("ITR" ester units). The ITR ester units can be present in the high heat poly(ester-carbonate) in an amount greater than or equal to 95 mol%, preferably greater than or equal to 99 mol%, and still more preferably greater than or equal to 99.5 mol%, based on the total moles of ester units in the polycarbonate. A preferred high heat poly(ester-carbonate) comprises bisphenol A carbonate units, and ITR ester units derived from terephthalic acid, isophthalic acid, and resorcinol, i.e., a poly(bisphenol A carbonate-co-isophthalate/terephthalate-resorcinol ester) of formula (c) 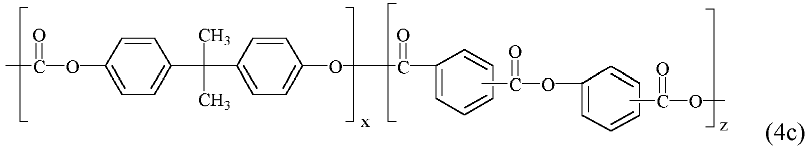 wherein the mole ratio of x:z is from 98:2 to 2:98, or from 90:10 to 10:90. In an aspect the mole ratio of x:z is from 50:50 to 99:1, or from 1:99 to 50:50. The ITR ester units can be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof can be present, in a total amount of 1 to 20 mole%, based on the total moles of units in the copolymers, for example monoaryl carbonate units of formula (5) and bisphenol ester units of formula (3a): 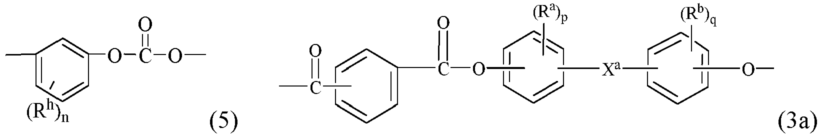 wherein, in the foregoing formulae, R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula - C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units can be bisphenol A phthalate ester units of the formula (3b)

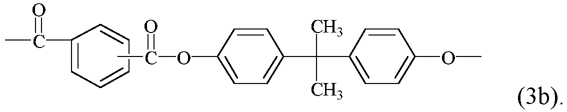

In an aspect, the poly(bisphenol A carbonate-co-isophthalate/terephthalate-resorcinol ester) (4c) comprises 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate/terephthalate resorcinol ester) (6) comprises 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof.

The high heat poly(ester-carbonate)s can be present from 5-95 wt%, 10-90 wt%, 20-80 wt%, 20-70 wt%, 20-60 wt%, 20-50 wt%, 25-75 wt%, 25-60 wt%, 30-70 wt%, 30-60 wt%, 30-50 wt%, 40-75 wt%, 40-70 wt%, 40-60 wt%, 50-90 wt%, 60-90 wt%, or 70-90 wt%, based on the total weight of the composition.

The high heat poly(ester-carbonate)s can have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, and as calibrated with bisphenol A homopolycarbonate standards. Samples are eluted at a flow rate of 1.0 ml/min with methylene chloride as the eluent.

The high heat copolycarbonate component can also include a high heat copolycarbonate that includes high heat carbonate units, optionally together with low heat carbonate units. A combination of different high heat units or low heat units can be used.

The low heat carbonate units can be derived from low heat bisphenol groups of formula (2) as described above wherein X^{a} is a C₁₋₁₈ bridging group. For example, X^{a} can be a C₃₋₆ cycloalkylidene, a C₁₋₆ alkylidene of the formula -C(R^{c})(R^{d}) - wherein R^{c} and R^{d} are each independently hydrogen, C₁₋₅ alkyl, or a group of the formula -C(=R^{e})- wherein R^{e} is a divalent C₁₋₅ hydrocarbon group. Some illustrative examples of dihydroxy compounds that can be used in the manufacture of the low heat monomer units are described, for example, in WO 2013/175448 A1, US 2014/0295363, and WO 2014/072923. In an aspect, the low heat bisphenol groups are derived from bisphenol A, which provides the low heat group of the following formula.

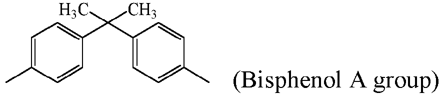

The high heat carbonate units are derived from a high heat bisphenol monomer. As used herein, a high heat bisphenol monomer is a monomer where the corresponding homopolycarbonate of the monomer has a glass transition temperature (Tg) of 170 °C or higher, or 170 to 250 °C, determined per ASTM D3418 with a 20 °C/min heating rate. Examples of such high heat bisphenol groups include groups of formulas (6) to (12) 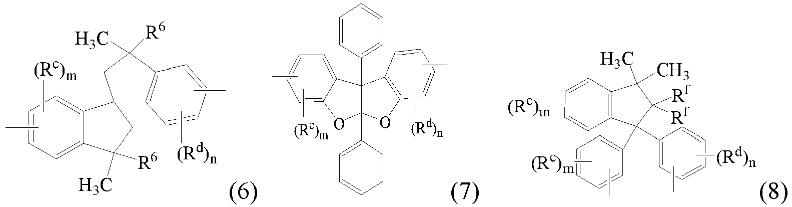 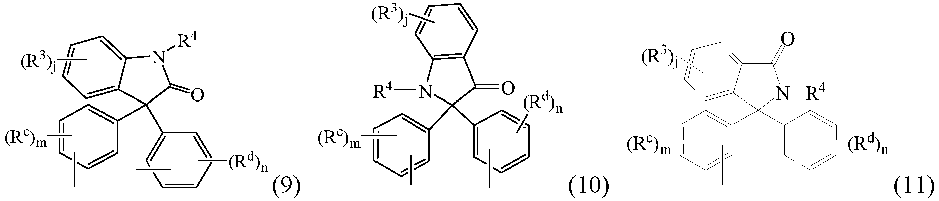 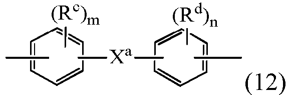 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1-5 C₁₋₆ alkyl groups, each R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{h})(R^{g})- wherein R^{h} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q¹)ₓ-G-(Q²)_{y}- wherein Q¹ and Q² are each independently a C₁₋₃ alkylene, G is a C₃₋₁₀ cycloalkylene, x is 0 or 1, and y is 1, and j, m and n are each independently 0-4, or 0 or 1. A combination of high heat bisphenol groups can be used.

In an aspect in formulas (6)-(12), R^{c} and R^{d} are each independently a C₁₋₃ alkyl, or C₁₋₃ alkoxy, each R⁶ is methyl, each R³ is independently C₁₋₃ alkyl, R⁴ is methyl, or phenyl, each R⁶ is independently C₁₋₃ alkyl or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or - (Q¹)ₓ-G-(Q²)_{y}- group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high heat bisphenol groups are shown below 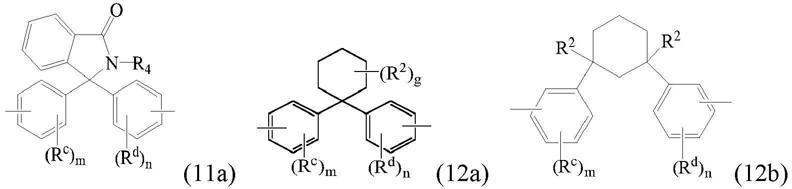 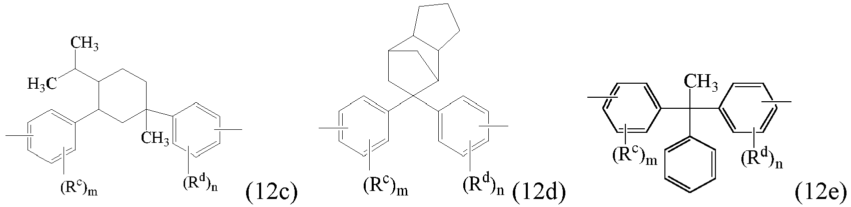 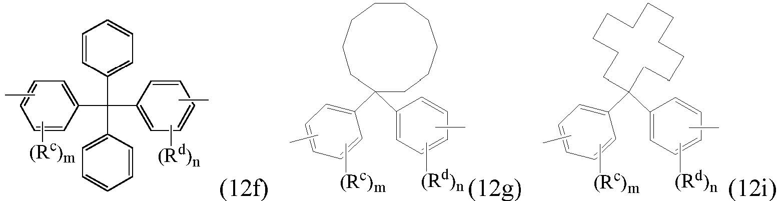 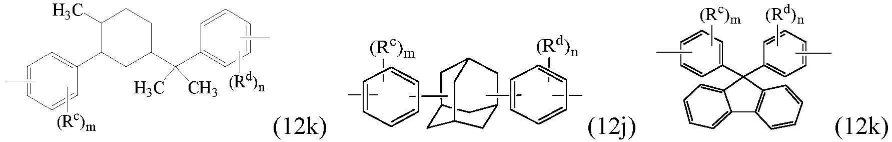 wherein R^{c} and R^{d} are the same as defined for formulas (6) to (12), each R² is independently C₁₋₄ alkyl, m and n are each independently 0-4, each R³ is independently C₁₋₄ alkyl or hydrogen, R⁴ is C₁₋₆ alkyl or phenyl optionally substituted with 1-5 C₁₋₆ alkyl groups, and g is 0-10. In a specific aspect each bond of the bisphenol group is located para to the linking group that is X^{a}. In an aspect, R^{c} and R^{d} are each independently a C₁₋₃ alkyl, or C₁₋₃ alkoxy, each R² is methyl, x is 0 or 1, y is 1, and m and n are each independently 0 or 1.

The high heat bisphenol group is preferably of formula (11a-2) or (12a-2) 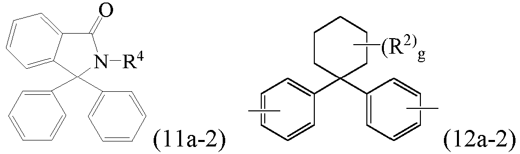 wherein R⁴ is methyl or phenyl, each R² is methyl, and g is 1-4. Preferably, the high heat bisphenol group is derived from N-phenyl phenolphthalein bisphenol (PPPBP, also known as 2-phenyl-3,3'-bis(4-hydroxyphenyl)) or from 1,1-bis(4-hydroxyphenyl)-3,3,5-trimethylcyclohexane (BP-TMC).

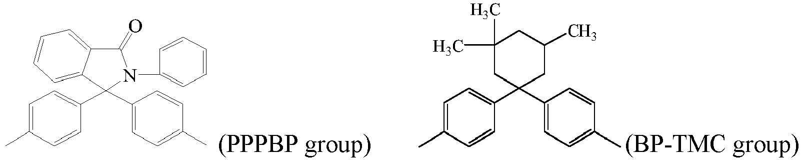

The high heat copolycarbonates can be present from 5-95 wt%, 10-90 wt%, 20-90 wt%, 10-40 wt%, 10-30 wt%, 10-20 wt%, or 20-40 wt%, based on the total weight of the composition.

The high heat copolycarbonates comprising high heat carbonate units can have an Mw of 10,000-50,000 g/mol, or 16,000-30,000 g/mol, as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute.

The glass-filled polycarbonate composition can include a poly(carbonate-siloxane) copolymer. The polysiloxane blocks comprise repeating diorganosiloxane units as in formula (13) 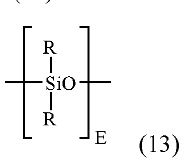 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (13) can vary widely depending on the type and relative amount of each component in the glass-filled polycarbonate composition, the desired properties of the composition, and like considerations. Generally, E has an average value of 2-1,000, specifically 2-500, 2-200, or 2-125, 5-80, or 10-70. In an aspect, E has an average value of 10-80 or 10-40, and in still another aspect, E has an average value of 40-80, or 40-70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

In an aspect, the polysiloxane blocks are of formula (14) 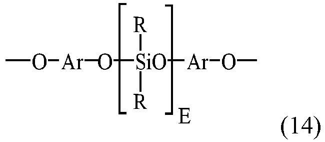 wherein E and R are as defined in formula (13); and Ar can be the same or different, and is a substituted or unsubstituted C₆₋₃₀ arylene, wherein the bonds are directly connected to an aromatic moiety. Ar groups in formula (14) can be the same or different, and can be derived from a C₆₋₃₀ dihydroxyarylene compound, for example a bisphenol compound of formula (2). Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, the polysiloxane blocks are of formula (15) 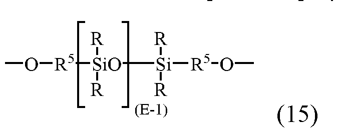 wherein E and R are as defined in formula (13), and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (16): 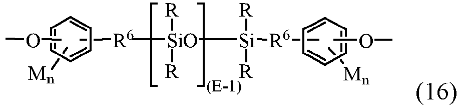 wherein R and E are as defined above. R⁶ in formula (16) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formulas 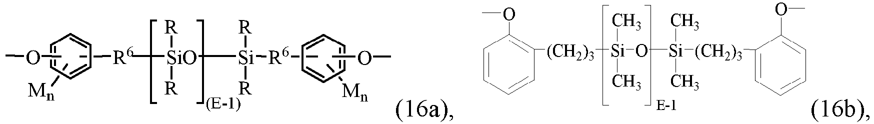 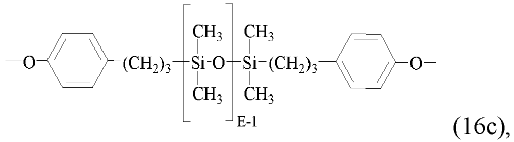 or a combination thereof, wherein E has an average value of 2-200, 2-125, 5-125, 5-100, 5-50, 20-80, or 5-20.

The poly(carbonate-siloxane) can comprise 50-99 wt% of carbonate units and 1-50 wt% siloxane units. Within this range, the poly(carbonate-siloxane) can comprise 70-98 wt%, more specifically 75-97 wt% of carbonate units and 2-30 wt%, more specifically 3-25 wt% siloxane units.

The poly(carbonate-siloxane) is present from 5-45 wt%, 5-40 wt%, 5-30 wt%, 5-25 wt%, 5-20 wt%, 5-15 wt%, 10-45 wt%, 10-40 wt%, 10-30 wt%, 10-25 wt%, or 10-20 wt%, 10-15 wt%, 15-45 wt%, 15-40 wt%, 15-30 wt%, 15-25 wt%, 20-45 wt%, 20-40 wt%, 20-30 wt%, 25-45 wt%, 25-40 wt%, 25-35 wt%, 30-45 wt%, or 35-45 wt% based on the total weight of the composition.

The poly(carbonate-siloxane) can have an Mw of 2,000-100,000 g/mol, specifically 5,000-50,000 g/mol as measured by gel permeation chromatography using a crosslinked styrene-divinyl benzene column, at a sample concentration of 1 milligram per milliliter, and as calibrated with bisphenol A homopolycarbonate standards. The poly(carbonate-siloxane)s can have a melt volume flow rate, measured at 300°C/1.2 kg, of 1-50 cubic centimeters per 10 minutes (cc/10 min), specifically 2-30 cc/10 min. Combinations of poly(carbonate-siloxane)s of different flow properties can be used to achieve the overall desired flow property.

The polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryloyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05-2.0 wt%. Combinations comprising linear polycarbonates and branched polycarbonates can be used.

The glass-filled polycarbonate compositions include phosphorous-containing flame retardants, in particular organophosphates and phosphazenes. The organophosphates can be monomeric or oligomeric, and can have the structure of formula (17) 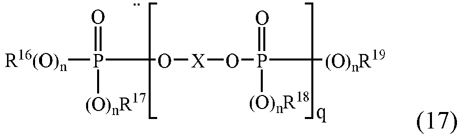 wherein R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl, and X is a mono- or poly-nuclear aromatic C₆₋₃₀ moiety or a linear or branched C₂₋₃₀ aliphatic radical, which can be OH-substituted and can contain up to 8 ether bonds, provided that at least one of R¹⁶, R¹⁷, R¹⁸, R¹⁹, and X is an aromatic group. In some aspects R¹⁶, R¹⁷, R¹⁸, and R¹⁹ are each independently C₁₋₄ alkyl, naphthyl, phenyl(C₁₋₄ alkylene), or aryl groups optionally substituted by C₁₋₄ alkyl. Specific aryl moieties are cresyl, phenyl, xylenyl, propylphenyl, or butylphenyl. In some aspects X in formula (17) is a mono- or poly-nuclear aromatic C₆₋₃₀ moiety derived from a diphenol. Further in formula (17), n is each independently 0 or 1; in some aspects n is equal to 1. Also in formula (17), q is from 0.5-30, from 0.8-15, from 1-5, or from 1-2. Specifically, X can be represented by the following divalent groups (18) or a combination thereof.

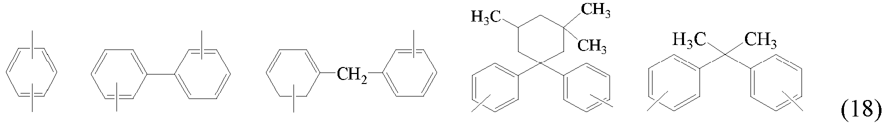

Preferably in formula (17), each of R¹⁶, R¹⁷, R¹⁸, and R¹⁹ can be aromatic, i.e., phenyl, n is 1, and q is 1-5, specifically 1-2, and X is of formula (18). In an aspect, in the glass-filled polycarbonate composition according to claim 1, the phosphorous-containing flame retardant may be of the formula (17), wherein R¹⁶, R¹⁷, R¹⁸ and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, and X is a mono- or poly-nuclear aromatic C₆₋₃₀ moiety or a linear or branched C₂₋₃₀ aliphatic radical, which can be OH-substituted and can contain up to 8 ether bonds, provided that at least one of R¹⁶, R¹⁷, R¹⁸, and R¹⁹, and X is aromatic, n is each independently 0 or 1, and q is from 0.5 to 30, and preferably wherein each of R¹⁶, R¹⁷, R¹⁸, and R¹⁹ is phenyl, X is of the formula (18), or a combination thereof, each n is 1, and q is 1 to 5.

Specific phosphorous-containing flame retardants are represented by formula (17a): 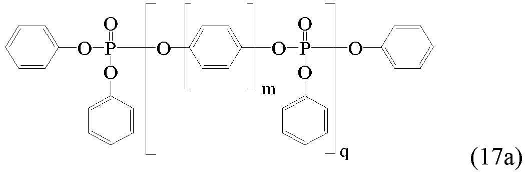 wherein m is 1 or 2, and q is as described in formula (17).

Commercially available phosphorous-containing flame retardants include an oligomeric phosphate ester having a phosphorous content of 10.7 wt%, a specific gravity of 1.3, and a melting point of 101-108 °C, available as Sol-DP from FYROLFLEX and a phosphate ester of formula (17b) 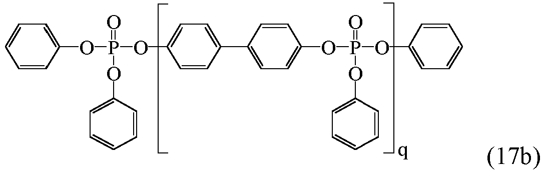 having a phosphorous content 9.5 wt%, available as FP 800 from CEL-SPAN.

Phosphazenes (19) and cyclic phosphazenes (21) 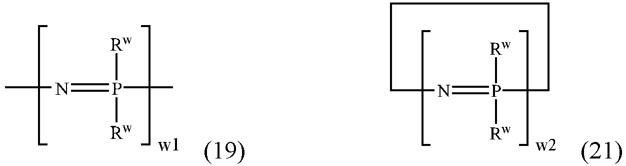 in particular can be used, wherein w1 is 3-10,000 and w2 is 3-25, specifically 3-7, and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. In some aspects, each R^{w} is independently a C₁₋₁₂ alkyl, C₂₋₁₂ alkenyl, C₁₋₁₂ alkoxy, C₆₋₁₂ aryl, C₆₋₁₂ aryloxy, or a polyoxy(C₁₋₆ alkylene) group. Any given R^{w} can further be a crosslink to another phosphazene group. Exemplary crosslinks include bisphenol groups, for example bisphenol A groups. The phosphorous-containing flame retardant can include phenoxy cyclotriphosphazene, octaphenoxy cyclotetraphosphazene decaphenoxy cyclopentaphosphazene, and the like. A combination of different phosphazenes can be used. A number of phosphazenes and their synthesis are described in H. R. Allcook, "Phosphorous-Nitrogen Compounds" Academic Press (1972), and J. E. Mark et al., "Inorganic Polymers" Prentice-Hall International, Inc. (1992).

The flame phosphorous-containing flame retardant is present in an amount effective to provide from 0.2-0.9 wt% or 0.3 -0.7 wt%, of added phosphorous, based on the total weight of the phosphorous-containing flame retardant. Accordingly, depending on the particular phosphorous-containing flame retardant used, the glass-filled polycarbonate compositions can include from 1-10 wt%, or from greater than 3.25-8 wt%, or from 4-8 wt%, or from 3.25-6.5 wt% of the phosphorous-containing flame retardant, each based on total weight of the glass-filled polycarbonate composition, which sums to 100 wt%.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆. When present, inorganic flame retardant salts are present in amounts of 0.01 to 10 parts by weight, more preferably 0.02 to 1 parts by weight, each based on total weight of the glass-filled polycarbonate composition, which sums to 100 wt%.

An anti-drip agent can be present in the glass-filled polycarbonate composition, for example a fibril forming or non-fibril forming fluoropolymer such as polytetrafluoroethylene (PTFE). The anti-drip agent can be encapsulated by a rigid copolymer as described above, for example styrene-acrylonitrile copolymer (SAN). PTFE encapsulated in SAN is known as TSAN. Encapsulated fluoropolymers can be made by polymerizing the encapsulating polymer in the presence of the fluoropolymer, for example an aqueous dispersion. TSAN can provide significant advantages over PTFE, in that TSAN can be more readily dispersed in the composition. TSAN can comprise 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Alternatively, the fluoropolymer can be pre-blended in some manner with a second polymer, such as for, example, an aromatic polycarbonate or SAN to form an agglomerated material for use as an anti-drip agent. Either method can be used to produce an encapsulated fluoropolymer. Anti-drip agents can generally be used in amounts of 0.1-0.97 wt%, 0.2-0.8 wt%, 0.2-0.7 wt%, 0.3-0.65 wt%, 0.1-0.5 wt%, or 0.1-0.3 wt%, or 0.1-0.2 wt%, each based on the total weight of the glass-filled polycarbonate composition, which sums to 100 wt%. In some aspects, the anti-drip agent is absent.

The composition comprises glass fibers. Suitable glass fibers include those based on E, A, C, ECR, R, S, D, and NE glasses, as well as quartz. In some aspects, the glass fiber has a diameter of about 2 to about 30 micrometers, specifically about 5 to about 25 micrometers, more specifically about 10 to about 15 micrometers. In some aspects, the length of the glass fibers before compounding is about 2 to about 7 millimeters, specifically about 3 to about 5 millimeters. Suitable glass fiber is commercially available from suppliers including, for example, Owens Corning, Nippon Electric Glass, PPG, and Johns Manville.

The glass fibers are present from 5-45 wt%, 5-40 wt%, 5-30 wt%, 5-25 wt%, 5-20 wt%, 5-15 wt%, 5-10 wt%, 10-45 wt%, 10-40 wt%, 10-30 wt%, 10-25 wt%, 10-20 wt%, 10-15 wt%, 15-45 wt%, 15-40 wt%, 15-30 wt%, 15-25 wt%, 15-20 wt%, 20-45 wt%, 20-40 wt%, 20-30 wt%, 20-25 wt%, 25-45 wt%, 25-40 wt%, 30-45 wt%, or 40-45 wt%, based on the total weight of the composition.

The glass-filled polycarbonate composition can further comprise an additive composition that can include various additives ordinarily incorporated into polymer compositions of this type, with the proviso that the additive(s) are selected so as to not significantly adversely affect the desired properties of the thermoplastic composition, in particular heat resistance, impact, and flame retardance. Combinations of additives can be used. The additive composition can include an impact modifier, flow modifier, particulate filler (e.g., a particulate polytetrafluoroethylene (PTFE), glass, carbon, mineral, or metal), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g., a dye or pigment), surface effect additive, radiation stabilizer, flame retardant different than the phosphorous-containing flame retardant, , or a combination thereof. An additive composition can be present from 0.1-10 wt%, or 0.1-5 wt%, or 0.1-2 wt%, or 0.1-1 wt%, based on total weight of the glass-filled polycarbonate composition, which sums to 100 wt%. In an aspect, in the glass-filled polycarbonate composition, the additive composition is present and comprises an impact modifier, a flow modifier, an antioxidant, a heat stabilizer, a light stabilizer, an ultraviolet light stabilizer, an ultraviolet absorbing additive, a plasticizer, a lubricant, a release agent, an antistatic agent, an anti-fog agent, an antimicrobial agent, a colorant, a surface effect additive, a radiation stabilizer, a flame retardant different from the phosphorous-containing flame retardant, or a combination thereof; and the glass-filled polycarbonate composition comprises 30 to 50 wt% of the poly(bisphenol A carbonate-bisphenol A phthalate ester) as the high heat copolycarbonate component, wherein the weight ratio of carbonate units to ester units is 75:25-85:15; 10 to 20 wt% of the poly(carbonate-siloxane), 5 wt% to less than 30 wt% of bisphenol A homopolycarbonate as the homopolycarbonate, having a weight average molecular weight from 18,000-35,000 grams/mole, preferably 20,000-25,000 grams/mole, as measured via gel permeation chromatography using bisphenol A homopolycarbonate standards; 10 to 40 wt% of the glass fibers; 0.1 to 2.0 wt% of the additive composition; the phosphorous-containing flame retardant which is present in an amount effective to provide 0.3 to 0.7 wt% of added phosphorous, based on the total weight of the phosphorous-containing flame retardant; optionally, 0.1 to 0.97 wt% of an anti-drip agent, wherein each amount is based on the total weight of the glass-filled polycarbonate composition, which sums to 100 wt%.

There is considerable overlap among plasticizers, lubricants, and mold release agents, which include, for example, phthalic acid esters (e.g., octyl-4,5-epoxy-hexahydrophthalate), tris-(octoxycarbonylethyl)isocyanurate, di- or polyfunctional aromatic phosphates (e.g., resorcinol tetraphenyl diphosphate (RDP), the bis(diphenyl) phosphate of hydroquinone and the bis(diphenyl) phosphate of bisphenol A); poly-alpha-olefins; epoxidized soybean oil; silicones, including silicone oils (e.g., poly(dimethyl diphenyl siloxanes); fatty acid esters (e.g., C₁₋₃₂alkyl stearyl esters, such as methyl stearate and stearyl stearate and esters of stearic acid such as pentaerythritol tetrastearate, glycerol tristearate (GTS), and the like), waxes (e.g., beeswax, montan wax, paraffin wax, or the like), or combinations comprising at least one of the foregoing plasticizers, lubricants, and mold release agents. These are generally used in amounts of 0.01-5 wt%, based on the total weight of total weight of the glass-filled polycarbonate composition, which sums to 100 wt%.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are used in amounts of 0.01-0.2, or 0.01-0.1 parts by weight, based on the total weight of the glass-filled polycarbonate composition, which sums to 100 wt%.

The glass-filled polycarbonate composition can be essentially free of chlorine and bromine. "Essentially free of chlorine and bromine" refers to materials produced without the intentional addition of chlorine or bromine or chlorine or bromine containing materials. It is understood however that in facilities that process multiple products a certain amount of cross contamination can occur resulting in bromine or chlorine levels typically on the parts per million by weight scale. With this understanding it can be readily appreciated that "essentially free of bromine and chlorine" can be defined as having a bromine or chlorine content of less than or equal to 100 parts per million by weight (ppm), less than or equal to 75 ppm, or less than or equal to 50 ppm. In some aspects, "essentially free of bromine and chlorine" means a total bromine and chlorine content of less than or equal to 100 parts per million by weight, or less than or equal to 75 ppm, or less than or equal to 50 ppm. When this definition is applied to the flame retardant it is based on the total weight of the flame retardant. When this definition is applied to the glass-filled polycarbonate composition it is based on the total parts by weight of the glass-filled polycarbonate composition.

In another aspect, the glass-filled polycarbonate composition can be essentially free of chlorine, bromine, and fluorine. "Essentially free of chlorine, bromine, and fluorine" is defined as having a bromine, chlorine, or fluorine content of less than or equal to 100 ppm, less than or equal to 75 ppm, or less than or equal to 50 ppm, based on the total parts by weight of the composition. Preferably, the glass-filled polycarbonate composition has a combined bromine, chlorine, and fluorine content of less than or equal to 100 ppm, less than or equal to 75 ppm, or less than or equal to 50 ppm, based on the total parts by weight of the composition.

The glass-filled polycarbonate compositions can be manufactured by various methods. For example, powdered polycarbonates, flame retardant, or other optional components are first blended, optionally with fillers in a HENSCHEL-Mixer high speed mixer. Other low shear processes, including but not limited to hand mixing, can also accomplish this blending. The blend is then fed into the throat of a twin-screw extruder via a hopper. Alternatively, at least one of the components, for example the reinforcing filler, can be incorporated into the composition by feeding directly into the extruder at the throat or downstream through a sidestuffer. Additives can also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared can be one-fourth inch long or less as desired. Such pellets can be used for subsequent molding, shaping, or forming.

A molded sample of the glass-filled polycarbonate composition has a Vicat B120 softening temperature of at least 135 °C as measured according to ISO 306.

A molded sample of the glass-filled polycarbonate composition can have a notched Izod impact strength of greater than or equal to 10 kiloJoule per square meter as measured at 23 °C according to ISO 180/1 A.

A molded sample of the glass-filled polycarbonate composition can have a heat distortion temperature of greater than 115 °C, preferably greater than 125 °C, more preferably greater than 130 °C, each as measured according to ISO 75 at 0.45 megapascal.

A molded sample of the glass-filled polycarbonate composition has a flame test rating of V0, as measured according to UL-94 at a thickness of 1.0 millimeter, or at a thickness of 0.8 mm, or at a thickness of 0.4 mm.

Shaped, formed, or molded articles comprising the polycarbonate compositions are also provided. The polycarbonate compositions can be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In an aspect, the article is an extruded article, a molded article, pultruded article, a thermoformed article, a foamed article, a layer of a multi-layer article, a substrate for a coated article, or a substrate for a metallized article, preferably wherein the article is a molded article, preferably a molded housing, more preferably an electrical circuit housing. In addition, the polycarbonate compositions can be used for such applications as a molded housing and other devices such as electrical circuit housing.

This disclosure is further illustrated by the following examples, which are nonlimiting.

### EXAMPLES

The following components are used in the examples. Unless specifically indicated otherwise, the amount of each component is in wt%, based on the total weight of the polycarbonate composition.

The materials shown in Table 1 were used.

**Table 1.**

| Component | Description (Trade name) | Source |
|---|---|---|
| PPC | Poly(bisphenol A carbonate-bisphenol A phthalate) having 19-21 wt% bisphenol A carbonate units and 79-81 wt% bisphenol A phthalate groups with an isophthalate:terephthalate ratio of 93:7; Tg = 174°C; Mw = 27,000-29,000 determined via GPC using bisphenol A homopolycarbonate standards | SABIC |
| PPPBP-BPA | Poly (N-phenyl phenolphthaleinyl bisphenol, 2,2-bis(4-hydro) carbonate - bisphenol A carbonate), 33 mol% PPPBP units, Mw = 22,000 - 24,000 g/mol determined via GPC using polystyrene standards, made by interfacial polymerization, PCP end-capped, PDI = 2-3 | SABIC |
| PC-Si | Poly(bisphenol A carbonate-dimethylsiloxane) copolymer produced via interfacial polymerization, 20 wt% siloxane, average siloxane block length = 45 units (D45), Mw = 29,000-31,000 g/mol, as determined by GPC using bisphenol A homopolycarbonate standards, para-cumylphenol (PCP) end-capped, PDI = 2-3 | SABIC |
| PC | Linear poly(bisphenol A carbonate), Tg = °C; Mw = 20,000-22,000 g/mol per GPC using BPA homopolycarbonate standards. | SABIC |
| FR-1 | Solid phosphonate ester, having the tradename Fyrolflex Sol-DP, 10.5 percent phosphorous by weight. | ICL-IP |
| FR-2 | Phenoxycyclophosphazene (FP-110T), 13.4 percent phosphorous by weight. | Fushimi |
| UVA | 2-(2-Hydroxy-5-tert-octylphenyl) benzotriazole, CAS Reg. No. 3147-75-9, from Cytec, having the tradename CYASORB UV5411 | ICL-IP |
| AO-1 | Hindered phenolic antioxidant , available as IRGANOX 1076 | BASF |
| PETS | Pentaerythritol tetrastearate, >90% esterified | Faci |
| Anti-drip | Styrene-acrylonitrile (SAN)-encapsulated PTFE | SABIC |
| Stab-1 | Tris(2,4-di-tert-butylphenyl) phosphite, available as IRGAFOS 168 | BASF |
| AO-2 | Tetrakis(2,4-di-tert-butylphenyl)-4,4-biphenyldiphosphonite, CAS 119345-01-6 | Clariant |
| GF-1 | Chopped glass (aluminum-borosilicate) fiber, bonding (with sizing) for PC, fiber length 2-5 mm, diameter 12-15.5 µm | Nippon Electric Glass |
| GF-2 | Flat glass fiberglass (CSG 3PA-830) | Nittobo |

The samples were prepared as described below and the following test methods were used.

All powder additives were combined together with the polycarbonate powder(s), using a paint shaker, and fed through one feeder to an extruder. Extrusion for all combinations was performed on a 25 mm twin screw extruder, using a melt temperature of 270-300 °C and 300 revolutions per minute (rpm), then pelleted. The glass fibers were fed separately through the hopper on a downstream side-feeder. The pellets were dried for 3-5 hours at 90-100 °C. Dried pellets were injection molded at temperatures of 280-300 °C to form specimens for most of the tests below. Thinner wall parts (e.g., 0.8 mm or lower) were molded at 290-310 °C.

Molding of test specimen for testing was done on an Engel 45 Ton injection molding machine.

Tensile properties (tensile stress at break, tensile strain at break, tensile modulus at break, strain at yield, nominal strain at break) were determined in accordance with ISO-527 at 23 °C.

Flexural modulus and flexural strength were determined in accordance with ISO 178. Specimens were multi-purpose ISO3167 Type A having a 4 mm thickness.

Puncture energy, room temperature was determined in accordance with ISO6603.

Energy at maximum force, room temperature was determined in accordance with ISO6603.

Heat distortion temperatures (HDT) were determined in accordance with the ISO-75-2:2013 standard with a 5.5 J hammer, using the flat side of 10 mm x 4 mm thick ISO bars and a load of 1.8 MPa (A/f).

Izod notched impact (INI) was determined in accordance with the ASTM D256 on 3.2 mm specimens at 23 °C.

Heat distortion temperature (HDT) was determined in accordance with the ISO-75 standard with a 5.5 Joule hammer, using the flat side of 4 mm thick ISO bars and a load of 1.8 MPa (A/f).

Melt volume rates were measured in accordance with the ISO-1133 standard at 300°C, using 1.2 kg of force for 300 seconds (s). The pellets were dried for 3 hours at 120°C before testing.

Melt viscosity (MV) (300 °C, 2000l/s) was determined in accordance with ISO11443.

ASTM Izod notched impact ("ASTM INI") values were determined according to ASTM D256-2010 on a 3.2 mm-thick bar at room temperature.

Glow wire flammability index (GWFI, 0.8 mm/960 °C) was determined in accordance with IEC 60695-2-2.

The Vicat softening temperature (Vicat) was measured on 4 mm thick ISO bars in accordance with the ISO-306 standard at a load of 50 N and a speed of 120 °C per hour (B120).

Flammability tests were performed at a thickness of 1.5 mm, 1.0 mm, 0.8 mm and 0.4 mm in accordance with the Underwriter's Laboratory (UL) UL 94 standard. In some cases, a second set of 5 bars was tested to give an indication of the robustness of the rating. In this report the following definitions are used as shown in Table 2. Total flame-out-times for all 5 bars (FOT = t1 + t2) were determined. V-ratings were obtained for every set of 5 bars. Samples were standard or aged. Samples were aged at 23 °C for 48 h, followed by 70 °C for 168 h.

**Table 2.**

| | t₁ and/or t₂ | 5-bar FOT | burning drips |
|---|---|---|---|
| V0 | <10 | <50 | no |
| V1 | <30 | <250 | no |
| V2 | <30 | <250 | yes |
| N.R. (no rating) | >30 | >250 | |

### Examples 1-7

The formulations and properties of Examples 1-7 are shown in Table 3.

**Table 3.**

| Component | Unit | 1* | 2 | 3 | 4 | 5 | 6 | 7 |
|---|---|---|---|---|---|---|---|---|
| PC-Si | wt% | | | | | 20 | 20 | 20 |
| PPC resin | wt% | 85.94 | 85.64 | 65.94 | 65.64 | 50.64 | 65.94 | 65.64 |
| PPPBP/BPA | wt% | | | 20 | 20 | 15 | | |
| Anti-drip | wt% | | 0.3 | | 0.3 | 0.3 | | 0.3 |
| FR-1 | wt% | 5 | 5 | 5 | 5 | 5 | 5 | 5 |
| AO-2 | wt% | 0.06 | 0.06 | 0.06 | 0.06 | 0.06 | 0.06 | 0.06 |
| GF-1 | wt% | 9 | 9 | 9 | 9 | 9 | 9 | 9 |
| Phosphorous* | wt% | 0.525 | 0.525 | 0.525 | 0.525 | 0.525 | 0.525 | 0.525 |
| Ester Content | wt% | 68.8 | 68.5 | 52.8 | 52.5 | 40.5 | 52.8 | 52.5 |
| Iso Content | wt% | 63.9 | 63.7 | 49.1 | 48.8 | 37.7 | 49.1 | 48.8 |

| Properties | | | | | | | | |
|---|---|---|---|---|---|---|---|---|
| Tensile Modulus | MPa | 5294 | 5186 | 5451 | 5380 | 5529 | 5206 | 5298 |
| Tensile Stress, break | MPa | 103 | 99 | 108 | 107 | 102 | 96 | 96 |
| Nominal Strain, break | % | 3.4 | 3.3 | 3.6 | 3.5 | 3.0 | 3.1 | 2.9 |
| Flexural Modulus | MPa | 5010 | 4672 | 5015 | 4840 | 4420 | 4447 | 4263 |
| Flexural Strength | MPa | 160 | 149 | 169 | 160 | 141 | 140 | 136 |
| Strain, strength | % | 4.2 | 4.1 | 4.4 | 4.2 | 4.1 | 4.2 | 4.2 |
| Stress at 3.5% strain | MPa | 150 | 140 | 152 | 147 | 131 | 131 | 127 |
| Puncture energy, 23°C | J | 6.8 | 6.4 | 6.3 | 6.5 | 11.6 | 11.9 | 10.5 |
| Energy, max force, 23°C | J | 6.2 | 5.8 | 5.9 | 6.0 | 10.0 | 10.4 | 8.4 |
| Deflection, break | mm | 5.5 | 5.2 | 5.5 | 5.4 | 7.3 | 7.4 | 7.1 |
| ASTM INI | J/m | 61 | 60 | 56 | 57 | 130 | 133 | 122 |
| Vicat B120 | °C | 147 | 150 | 155 | 154 | 145 | 141 | 141 |
| HDT, flat | °C | 136 | 139 | 144 | 144 | 136 | 132 | 133 |
| MVR, 300 s | cm³/10 min | 3.5 | 3.1 | 5.0 | 4.2 | 3.3 | 3.1 | 3.0 |
| MVR, 900 s | cm³/10 min | 4.1 | 3.6 | 8.0 | 5.1 | 3.8 | 4.0 | 3.9 |
| MV, 2000 l/s | Pa·s | 503 | 506 | 379 | 434 | 230 | 368 | 219 |
| UL94 at 1.5 mm, standard | | V0 | V0 | V0 | V0 | V0 | V0 | V0 |
| UL94 at 1.5 mm, aged | | V0 | V0 | V0 | V0 | V0 | V0 | V0 |
| UL94 at 1.0 mm, standard | | V0 | V0 | V0 | V0 | V0 | V0 | V0 |
| UL94 at 1.0 mm, aged | | V0 | V0 | V0 | V0 | V0 | V0 | V0 |
| UL94 at 0.8 mm, standard | | X | V0 | V0 | V0 | V0 | V0 | V0 |
| UL94 at 0.8 mm, aged | | X | V0 | V0 | V0 | V0 | V0 | V0 |
| GWFI | 0.8mm / 960°C | X | yes | X | yes | yes | yes | yes |

| | | | | | | | | |
|---|---|---|---|---|---|---|---|---|
| *Comparative Examples | | | | | | | | |

The properties for samples of compositions having 9 wt% glass fibers are shown in Examples 1-7 in Table 3. A combination of poly(ester-carbonate) (PPC) and high heat copolycarbonate (PPPBP-BPA) resulted in about a 5 degree increase in the Vicat softening temperature when compared to PPC compositions wherein PPPBP-BPA was absent (compare Comparative Example 1 and Example 2 with Examples 3-4). Replacing some of the PPPBP-BPA and/or PPC with poly(carbonate-siloxane) (PC-Si) decreased the Vicat softening temperature, whereas the impact resistance was dramatically improved (Examples 5-7). Examples 8-14

The formulations and properties of Examples 8-14 are shown in Table 4.

**Table 4**

| Component | Unit | | | 10 | 11 | 12 | 13 | 14 |
|---|---|---|---|---|---|---|---|---|
| PC-Si | Wt% | | 8 | 9 | | 20 | 20 | 20 |
| PPC resin | Wt% | 74.94 | 74.64 | 64.94 | 64.64 | 44.64 | 44.64 | 54.94 |
| PPPBP/BPA | Wt% | | | 10 | 10 | 10 | 10 | |
| Anti-drip | Wt% | | 0.3 | | 0.3 | 0.3 | 0.3 | |
| FR-1 | Wt% | 5 | 5 | 5 | 5 | 5 | 5 | 5 |
| AO-2 | Wt% | 0.06 | 0.06 | 0.06 | 0.06 | 0.06 | 0.06 | 0.06 |
| GF-1 | Wt% | 20 | 20 | 20 | 20 | 20 | 20 | 20 |
| Phosphorous | Wt% | 0.525 | 0.525 | 0.525 | 0.525 | 0.525 | 0.525 | 0.525 |
| Ester Content | mol% | 60.0 | 59.7 | 52.0 | 51.7 | 35.7 | 35.7 | 44.0 |
| Iso Content | mol% | 55.8 | 55.5 | 48.3 | 48.1 | 33.2 | 33.2 | 41.0 |

| Properties | | | | | | | | |
|---|---|---|---|---|---|---|---|---|
| Tensile Modulus | MPa | 9201 | 9044 | 9338 | 9177 | 9267 | 9193 | 9057 |
| Tensile Stress, break | MPa | 116 | 115 | 131 | 126 | 128 | 128 | 122 |
| Nominal Strain, break | % | 2.1 | 2.1 | 2.5 | 2.4 | 2.6 | 2.6 | 2.4 |
| Flexural Modulus | MPa | 7886 | 7543 | 7810 | 7692 | 7819 | 7470 | 7402 |
| Flexural Strength | MPa | 175 | 168 | 188 | 180 | 182 | 178 | 165 |
| Strain, strength | % | 2.6 | 2.6 | 2.9 | 2.8 | 2.9 | 3.0 | 2.7 |
| Puncture energy, 23 °C | J | 5.4 | 5.7 | 6.4 | 5.9 | 11.4 | 11.5 | 9.3 |
| Energy, max force, 23 °C | J | 4.9 | 4.8 | 5.6 | 5.3 | 9.8 | 8.6 | 7.4 |
| Deflection, break | mm | 4.4 | 4.6 | 4.7 | 4.6 | 6.6 | 6.7 | 6.3 |
| ASTM INI, 3.2 mm, 23 °C | J/m | 78 | 77 | 86 | 78 | 129 | 136 | 116 |
| Vicat B120 | °C | 144 | 147 | 150 | 149 | 140 | 140 | 138 |
| HDT, 1.8 MPa, flat | °C | 133 | 136 | 140 | 139 | 132 | 132 | 130 |
| MVR, 300 s | cm³/10 min | 2.3 | 2.4 | 2.4 | 2.7 | 2.7 | 2.8 | 2.2 |
| MVR, 900 s | cm³/10 min | 2.4 | 2.7 | 3.0 | 3.1 | 3.3 | 3.8 | 2.6 |
| MV, 2000 l/s | Pa·s | 0 | 545 | 524 | 511 | 274 | 258 | 272 |
| UL94 at 1.5 mm, standard | | V0 | V0 | V0 | V0 | V0 | V0 | V0 |
| UL94 at 1.5 mm, aged | | V0 | V0 | V0 | V0 | V0 | V0 | V0 |
| UL94 at 1.0 mm, standard | | V0 | V0 | V0 | V0 | V0 | V0 | V0 |
| UL94 at 1.0 mm, aged | | V0 | V0 | V0 | V0 | V0 | V0 | V0 |
| UL94 at 0.8 mm, standard | | V0 | V0 | V0 | V0 | V0 | V0 | V0 |
| UL94 at 0.8 mm, aged | | V0 | V0 | V0 | V0 | V0 | V0 | V0 |
| GWFI | 0.8 mm / 960 °C | X | X | yes | yes | yes | yes | yes |

Examples 8-14 show that the mechanical properties (tensile modulus, flexural modulus) for compositions having 20 wt% glass fibers were substantially improved compared to the compositions having 9 wt% glass fibers (Examples 1-7, Table 2). The thermal properties (Vicat softening temperature and HDT) were similar for compositions having PPC with or without PPPBP-BPA (compare Examples 8-9 with Examples 10-11). Among Examples 8-14, compositions including both PPC and PPPBP-BPA had the highest Vicat softening temperatures (Examples 10-11). When PC-Si was added to compositions including both PPC and PPPBP-BPA, there was about a 10 degree decrease in the Vicat softening temperatures (compare Examples 12-13 with Examples 10-11). However, when comparing compositions having PC-Si, the effect of the absence of PPPBP-BPA on the Vicat softening temperature was small (2 degrees) (compare Examples 12-13 with Example 14). Similar to the compositions in Table 3, the addition of PC-Si to the compositions showed dramatic improvements in the impact resistance (Examples 12-14).

### Examples 15-22

The formulations and properties of Examples 15-19 are shown in Table 5.

**Table 5.**

| Component | Unit | 15* | 16 | 17* | 18 | 19 |
|---|---|---|---|---|---|---|
| PC-Si | Wt% | 16.00 | 16.00 | 16.00 | 16.00 | 16.00 |
| PC | Wt% | 40.10 | 37.10 | 34.10 | 36.90 | 36.70 |
| PPPBP/BPA | Wt% | 30.00 | 30.00 | 30.00 | 30.00 | 30.00 |
| Anti-drip | Wt% | 0.2 | 0.2 | 0.2 | 0.4 | 0.6 |
| FR-2 | Wt% | 3.00 | 6.00 | 9.00 | 6.00 | 6.00 |
| Stab | Wt% | 0.10 | 0.10 | 0.10 | 0.10 | 0.10 |
| AO-1 | Wt% | 0.10 | 0.10 | 0.10 | 0.10 | 0.10 |
| PETS | Wt% | 0.50 | 0.50 | 0.50 | 0.50 | 0.50 |
| GF-1 | Wt% | 10.00 | 10.00 | 10.00 | 10.00 | 10.00 |
| Phosphorous* | Wt% | 0.402 | 0.804 | 1.21 | 0.804 | 0.804 |
| Flexural Modulus | MPa | 3830 | 4018 | 4047 | 3981 | 4080 |
| Flexural Strength | MPa | 128 | 128 | 129 | 126 | 130 |
| HDT, flat | °C | 142 | 132 | 126 | 132 | 133 |
| Vicat B120 | °C | 151 | 142 | 134 | 141 | 141 |
| MVR | cm³/10 min | 10 | 14 | 18 | 14 | 13 |
| UL94 at 0.4 mm, aged | | V2 | V2 | V0 | V0 | V0 |
| UL94 at 0.8 mm, aged | | V1 | V0 | V0 | V0 | V0 |

| | | | | | | |
|---|---|---|---|---|---|---|
| *Comparative Examples | | | | | | |

Examples 15-19 show the properties of the molded samples having PPPBP-BPA, a homopolycarbonate (PC), PC-Si, and a phosphazene flame retardant (FR-2). When FR-2 was present at 3 wt%, the flammability rating was adversely affected (Comparative Example 15). When FR-2 was present at 9 wt%, the flammability rating was desirably V0 at a thickness of 0.8 mm, but the Vicat softening temperature was decreased (Comparative Example 17). Therefore, for PPPBP-BPA mixtures wherein PPC was absent, the loading of FR-2 should range between 3 wt% and 9 wt% to achieve the desired balance of properties. Samples having 6 wt% FR-2 had both a flammability rating of V0 at a thickness of 0.8 mm and a Vicat softening temperature greater than or equal to 135°C (Examples 16, 18-19). Advantageously, Examples 18-19 had both a flammability rating of V0 at thicknesses of 0.8 mm and 0.4 mm and a Vicat softening temperature of 141-142 °C. The processability (MVR) of Examples 15-19 was improved relative to the compositions of Tables 3-4, wherein PC was absent.

### Examples 23-32

The formulations and properties of Examples 20-29 are shown in Table 6.

**Table 6.**

| Component | Unit | 20* | 21 | 22 | 23* | 24 | 25 | 26 | 27 | 28 | 29 |
|---|---|---|---|---|---|---|---|---|---|---|---|
| PC | Wt% | 33.1 | 13.1 | 13.1 | 30.6 | 34.1 | 31.1 | 40.6 | 41.1 | 33 | 43.1 |
| PC-Si | Wt% | 12 | 12 | 12 | 12 | 12 | 12 | 12 | 12 | 12 | 12 |
| PPC | Wt% | 40 | 40 | 40 | 40 | 40 | 40 | | | 40 | |
| PPPBP-BPA | Wt% | | | | | | | 30 | 30 | | 30 |
| FR-1 | Wt% | 4 | 4 | 4 | 6.5 | | | 6.5 | | | |
| FR-2 | Wt% | | | | | 3 | 6 | | 6 | 4 | 4 |
| UVA | Wt% | 0.15 | 0.15 | 0.15 | 0.15 | 0.15 | 0.15 | 0.15 | 0.15 | 0.15 | 0.15 |
| AO-1 | Wt% | 0.1 | 0.1 | 0.1 | 0.1 | 0.1 | 0.1 | 0.1 | 0.1 | 0.1 | 0.1 |
| PETS | Wt% | 0.3 | 0.3 | 0.3 | 0.3 | 0.3 | 0.3 | 0.3 | 0.3 | 0.3 | 0.3 |
| Anti-drip | Wt% | 0.3 | 0.3 | 0.3 | 0.3 | 0.3 | 0.3 | 0.3 | 0.3 | 0.4 | 0.3 |
| Stab | Wt% | 0.05 | 0.05 | 0.05 | 0.05 | 0.05 | 0.05 | 0.05 | 0.05 | 0.05 | 0.05 |
| GF-1 | Wt% | 10 | 30 | | 10 | 10 | 10 | 10 | 10 | 10 | 10 |
| GF-2 | Wt% | | | 30 | | | | | | | |
| Phosphorous | Wt% | 0.42 | 0.42 | 0.42 | 0.68 | 0.32 | 0.63 | 0.68 | 0.63 | 0.42 | 0.42 |
| Ester Content | mol% | 32 | 32 | 32 | 32 | 32 | 32 | | | 32 | |
| Iso Content | mol% | 30 | 30 | 30 | 30 | 30 | 30 | | | 30 | |

| Properties | | | | | | | | | | | |
|---|---|---|---|---|---|---|---|---|---|---|---|
| UNI | kJ/m² | 47 | 34 | 62 | 37 | 80 | 70 | 39 | 43 | 32 | 38 |
| HDT, flat | °C | 124 | 128 | 130 | 116 | 137 | 130 | 133 | 136 | 129 | 139 |
| Vicat B120 | °C | 132 | 136 | 138 | 123 | 147 | 139 | 139 | 143 | 136 | 147 |
| MVR, 300 s | cm³/10 min | 7.2 | 3.8 | 3.2 | 8.3 | 5.7 | 7.3 | 12.9 | 15.4 | 7.0 | 13.5 |
| UL94 at 0.8 mm, aged | | V0 | V0 | V0 | V0 | V0 | V0 | V0 | V0 | V0 | NR |

In molded samples wherein PPC, PC-Si and PC were present, PPPBP-BPA was absent, and FR-2 was the flame retardant, at PC loadings of greater than about 30 wt%, a decrease in Vicat softening temperature was observed (Comparative Examples 20 and 23). However, in molded samples of similar compositions wherein FR-1 was the flame retardant, PC levels at or above 30 wt% did not result in depressed Vicat softening temperatures (Examples 24, 25, and 28). For molded samples of compositions having PPPBP-BPA and PC, wherein PPC was absent, at PC levels greater than about 40 wt%, Vicat softening temperatures above 135°C were observed for both FR-1 (Example 26) and FR-2 (Example 27).

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "a" and "an" and "the" do not denote a limitation of quantity and are to be construed to cover both the singular and the plural, unless otherwise indicated herein or clearly contradicted by context. "Or" means "and/or" unless clearly stated otherwise. It is to be understood that the described elements may be combined in any suitable manner in the various aspects. A "combination thereof" is open and includes any combination comprising at least one of the listed components or properties optionally together with a like or equivalent component or property not listed.

Unless specified to the contrary herein, all test standards are the most recent standard in effect as of the filing date of this application, or, if priority is claimed, the filing date of the earliest priority application in which the test standard appears.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A glass-filled polycarbonate composition comprising
5 to 95 wt% of a high heat copolycarbonate component having a glass transition temperature of 170 °C or higher as determined per ASTM D3418 with a 20 °C/min heating rate;
a phosphorous-containing flame retardant present in an amount effective to provide about 0.2 to 0.9 wt% of added phosphorous, based on the total weight of the phosphorous-containing flame retardant;
5 to 45 wt% of glass fibers;
and
wherein each amount is based on the total weight of the glass-filled polycarbonate composition, which sums to 100 wt%
wherein a molded sample of the glass-filled polycarbonate composition has
a Vicat softening temperature of greater than or equal to 135 °C as measured according to ISO 306, and
a flame test rating of V0 as measured according to UL-94 at a thickness of 1.0 millimeter, preferably 0.8 millimeter, or preferably 0.4 millimeter.

2. The glass-filled polycarbonate composition of claim 1, comprising:
5 to 50 wt% of a homopolycarbonate having a weight average molecular weight from 15,000 to 40,000 grams/mole, as measured via gel permeation chromatography using bisphenol A homopolycarbonate standards; and/or
5 to 45 wt% of a poly(carbonate-siloxane); and/or
0.1 to 0.97 wt% of an anti-drip agent; and/or
0.1 to 10 wt% of an additive composition.

3. The glass-filled polycarbonate composition of claim 1 or claim 2, wherein the high heat copolycarbonate component comprises
a poly(carbonate-bisphenol phthalate ester) comprising 1-50 wt% of aromatic carbonate units and 50-99 wt% of bisphenol phthalate ester units, each based on the sum of the weight of the carbonate units and the bisphenol phthalate ester units; or
a high heat copolycarbonate comprising high heat aromatic carbonate units derived from 1,1-bis(4-hydroxyphenyl)-3,3,5-trimethyl-cyclohexane, N-phenyl phenolphthalein bisphenol, 4,4'-(1-phenylethylidene)bisphenol, 4,4'-(3,3-dimethyl-2,2-dihydro-1H-indene-1,1-diyl)diphenol, 1,1-bis(4-hydroxyphenyl)cyclododecane, 3,8-dihydroxy-5a,10b-diphenyl-coumarano-2',3',2,3-coumarane, or a combination thereof, preferably 1,1-bis(4-hydroxyphenyl)-3,3,5-trimethyl-cyclohexane, N-phenyl phenolphthalein bisphenol, or a combination thereof, and optionally, low heat aromatic carbonate units, preferably bisphenol A carbonate units;
or a combination thereof.

4. The glass-filled polycarbonate composition of any one of the preceding claims, wherein the high heat copolycarbonate component comprises poly(carbonate-bisphenol phthalate ester) having the formula 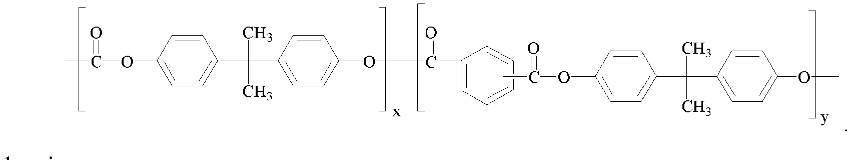 wherein
the weight ratio of carbonate units x to ester units y is 10:90-45:55, preferably 75:25-85:15, and
the ester units have a molar ratio of isophthalate to terephthalate from 98:2-88:12.

5. The glass-filled polycarbonate composition according to any one of the preceding claims, wherein the low heat carbonate units of the high heat copolycarbonate are present and comprise bisphenol A carbonate units.

6. The glass-filled polycarbonate composition of any one of the preceding claims, wherein the phosphorous-containing flame retardant is of the formula 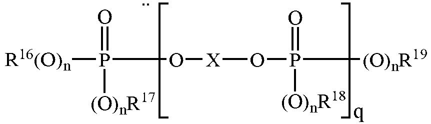 wherein
R¹⁶, R¹⁷, R¹⁸ and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, and
X is a mono- or poly-nuclear aromatic C₆₋₃₀ moiety or a linear or branched C₂₋₃₀ aliphatic radical, which can be OH-substituted and can contain up to 8 ether bonds, provided that at least one of R¹⁶, R¹⁷, R¹⁸, R¹⁹, and X is aromatic,
n is each independently 0 or 1, and
q is from 0.5 to 30, and
preferably wherein
each of R¹⁶, R¹⁷, R¹⁸, and R¹⁹ is phenyl,
X is of the formula 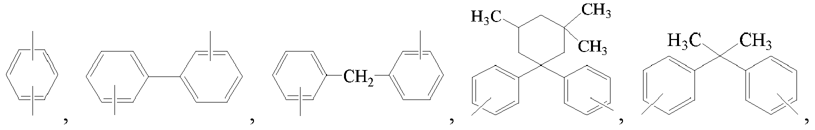 or a combination thereof,
each n is 1, and
q is 1 to 5.

7. The glass-filled polycarbonate composition of any one of the preceding claims, wherein the phosphorous-containing flame retardant is of the formula 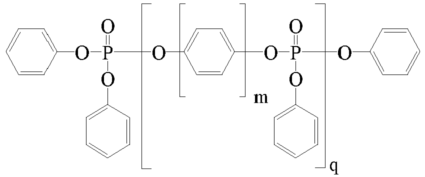 wherein m is 1 or 2, and q is 1 to 5.

8. The glass-filled polycarbonate composition of any one of claims 1-5, wherein the phosphorous-containing flame retardant is a phosphazene of 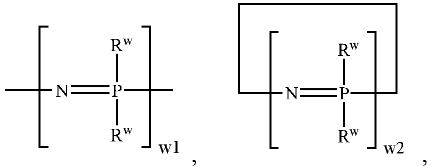 or a combination thereof, wherein
w1 is 3 to 10,000,
w2 is 3 to 25, preferably 3 to 7, and
each R^{w} is independently a C₁₋₁₂ alkyl, C₂₋₁₂ alkenyl, C₁₋₁₂ alkoxy, C₆₋₁₂ aryl, C₆₋₁₂ aryloxy, or polyoxy(C₁₋₆ alkylene) group.

9. The glass-filled polycarbonate composition of any one of claims 2-8, wherein the additive composition is present and comprises an impact modifier, a flow modifier, an antioxidant, a heat stabilizer, a light stabilizer, an ultraviolet light stabilizer, an ultraviolet absorbing additive, a plasticizer, a lubricant, a release agent, an antistatic agent, an anti-fog agent, an antimicrobial agent, a colorant, a surface effect additive, a radiation stabilizer, a flame retardant different from the phosphorous-containing flame retardant, or a combination thereof.

10. The glass-filled polycarbonate composition of any one of claims 2-9 comprising
80 to 90 wt% of the poly(bisphenol A carbonate-bisphenol A phthalate ester) as the copolycarbonate component, wherein the weight ratio of carbonate units to ester units is 75:25-85:15;
5 to 15 wt% of the glass fibers;
0.1 to 2.0 wt% of the additive composition,
the phosphorous-containing flame retardant is present in an amount effective to provide 0.3 to 0.7 wt% of added phosphorous, based on the total weight of the phosphorous-containing flame retardant;
optionally, 0.1 to 0.97 wt% of the anti-drip agent, and
wherein each amount is based on the total weight of the glass-filled polycarbonate composition, which sums to 100 wt%.

11. The glass-filled polycarbonate composition of any one of claims 2-9 comprising
20 to 40 wt% of the high heat copolycarbonate as the high heat copolycarbonate component, wherein the high heat copolycarbonate comprises units derived from 1,1-bis(4-hydroxyphenyl)-3,3,5-trimethyl-cyclohexane, N-phenyl phenolphthalein bisphenol, or a combination thereof;
10 to 20 wt% of the poly(carbonate-siloxane);
5 to 50 wt% of bisphenol A homopolycarbonate as the homopolycarbonate, having a weight average molecular weight from 18,000-35,000 grams/mole, preferably 20,000-25,000 grams/mole;
10 to 40 wt% of the glass fibers;
the phosphorous-containing flame retardant is present in an amount effective to provide 0.3 to 0.7 wt% of added phosphorous, based on the total weight of the phosphorous-containing flame retardant; and
0.1 to 2.0 wt% of the additive composition;
optionally, 0.1 to 0.97 wt% of the anti-drip agent,
wherein each amount is based on the total weight of the glass-filled polycarbonate composition, which sums to 100 wt%.

12. The glass-filled polycarbonate composition of claim 7 or claim 8 comprising
30 to 50 wt% of the poly(bisphenol A carbonate-bisphenol A phthalate ester) as the high heat copolycarbonate component, wherein the weight ratio of carbonate units to ester units is 75:25-85:15;
10 to 20 wt% of the poly(carbonate-siloxane)
5 to 40 wt% of bisphenol A homopolycarbonate having a weight average molecular weight from 18,000-35,000 grams/mole, preferably 20,000-25,000 grams/mole, as measured via gel permeation chromatography using bisphenol A homopolycarbonate standards;
10 to 40 wt% of the glass fibers;
0.1 to 2.0 wt% of the additive composition; and
the phosphorous-containing flame retardant is present in an amount effective to provide 0.3 to 0.7 wt% of added phosphorous, based on the total weight of the phosphorous-containing flame retardant;
optionally, 0.1 to 0.97 wt% of the anti-drip agent,
wherein each amount is based on the total weight of the glass-filled polycarbonate composition, which sums to 100 wt%.

13. The glass-filled polycarbonate composition of claim 9 comprising
30 to 50 wt% of the poly(bisphenol A carbonate-bisphenol A phthalate ester) as the high heat copolycarbonate component, wherein the weight ratio of carbonate units to ester units is 75:25-85:15;
10 to 20 wt% of the poly(carbonate-siloxane);
5 wt% to less than 30 wt% of bisphenol A homopolycarbonate as the homopolycarbonate, having a weight average molecular weight from 18,000-35,000 grams/mole, preferably 20,000-25,000 grams/mole, as measured via gel permeation chromatography using bisphenol A homopolycarbonate standards;
10 to 40 wt% of the glass fibers;
0.1 to 2.0 wt% of the additive composition; and
the phosphorous-containing flame retardant is present in an amount effective to provide 0.3 to 0.7 wt% of added phosphorous, based on the total weight of the phosphorous-containing flame retardant;
optionally, 0.1 to 0.97 wt% of the anti-drip agent,
wherein each amount is based on the total weight of the glass-filled polycarbonate composition, which sums to 100 wt%.

14. An article of any one of the preceding claims, wherein the article is an extruded article, a molded article, pultruded article, a thermoformed article, a foamed article, a layer of a multi-layer article, a substrate for a coated article, or a substrate for a metallized article, preferably wherein the article is a molded article, preferably a molded housing, more preferably an electrical circuit housing.

15. A method for forming the article of any one of the preceding claims, comprising molding, casting, or extruding the composition to provide the article.

## Patentansprüche

1. Glasgefüllte Polycarbonatzusammensetzung, umfassend
zu 5 bis 95 Gew.-% eine Hochtemperaturcopolycarbonatkomponente, die eine Glasübergangstemperatur von 170 °C oder höher aufweist, wie gemäß ASTM D3418 mit einer Erwärmungsgeschwindigkeit von 20 °C/min bestimmt;
ein phosphorhaltiges Flammschutzmittel, das in einer wirksamen Menge vorhanden ist, um etwa 0,2 bis 0,9 Gew.-% zugesetzten Phosphor bereitzustellen, basierend auf dem Gesamtgewicht des phosphorhaltigen Flammschutzmittels;
zu 5 bis 45 Gew.-% Glasfasern;
und
wobei jede Menge auf dem Gesamtgewicht der glasgefüllten Polycarbonatzusammensetzung basiert, das sich auf 100 Gew.-% summiert,
wobei eine geformte Probe der glasgefüllten Polycarbonatzusammensetzung aufweist
eine Vicat-Erweichungstemperatur von größer als oder gleich 135 °C, gemessen gemäß ISO 306, und
eine Flammtestbewertung von V0, wie gemäß UL-94 bei einer Dicke von 1,0 Millimeter, vorzugsweise 0,8 Millimeter oder vorzugsweise 0,4 Millimeter gemessen.

2. Glasgefüllte Polycarbonatzusammensetzung nach Anspruch 1, umfassend:
zu 5 bis 50 Gew.-% ein Homopolycarbonat, das ein Massenmittel von 15.000 bis 40.000 Gramm/Mol aufweist, wie über Gelpermeationschromatographie unter Verwendung von Bisphenol-A-Homopolycarbonat-Standards gemessen; und/oder
zu 5 bis 45 Gew.-% ein Poly(carbonatsiloxan); und/oder
zu 0,1 bis 0,97 Gew.-% ein Antitropfmittel; und/oder
zu 0,1 bis 10 Gew.-% eine Zusatzzusammensetzung.

3. Glasgefüllte Polycarbonatzusammensetzung nach Anspruch 1 oder 2, wobei die hochwärmebeständige Copolycarbonatkomponente umfasst
ein Poly(carbonat-bisphenolphthalatester), umfassend zu 1-50 Gew.-% aromatische Carbonateinheiten und zu 50-99 Gew.-% Bisphenolphthalatestereinheiten, jeweils basierend auf der Summe des Gewichts der Carbonateinheiten und der Bisphenolphthalatestereinheiten; oder
ein Hochtemperaturcopolycarbonat, umfassend Hochtemperaturcarbonateinheiten, die von 1,1-Bis(4-hydroxyphenyl)-3,3,5-trimethylcyclohexan, N-Phenylphenolphthaleinbisphenol, 4,4'-(1-Phenylethyliden)bisphenol, 4,4'-(3,3-Dimethyl-2,2-dihydro-1H-inden-1,1-diyl)diphenol, 1,1-Bis(4-hydroxyphenyl)cyclododecan, 3,8-Dihydroxy-5a,10b-diphenyl-cumarano-2',3',2,3-cumaran, oder einer Kombination davon, vorzugsweise 1,1-Bis(4-hydroxyphenyl)-3,3,5-trimethyl-cyclohexan, N-Phenylphenolphthaleinbisphenol oder einer Kombination davon, und optional aromatischen Niedrigtemperaturcarbonateinheiten, vorzugsweise Bisphenol-A-Carbonateinheiten, abstammen;
oder eine Kombination davon.

4. Glasgefüllte Polycarbonatzusammensetzung nach einem der vorstehenden Ansprüche, wobei die Hochtemperaturcopolycarbonatkomponente Poly(carbonatbisphenolphthalatester) umfasst, der die Formel aufweist 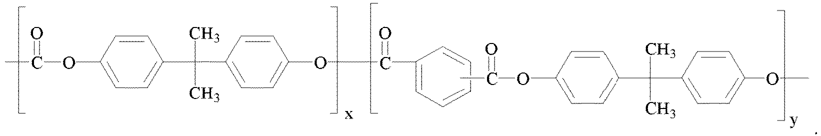 wobei
das Gewichtsverhältnis von Carbonateinheiten x zu Estereinheiten y 10 : 90-45 : 55, vorzugsweise 75 : 25-85 : 15 beträgt, und
die Estereinheiten ein Molverhältnis von Isophthalat zu Terephthalat von 98 : 2-88 : 12 aufweisen.

5. Glasgefüllte Polycarbonatzusammensetzung nach einem der vorstehenden Ansprüche, wobei die Niedrigtemperaturcarbonateinheiten des Hochtemperaturcopolycarbonats vorhanden sind und Bisphenol-A-Carbonateinheiten umfassen.

6. Glasgefüllte Polycarbonatzusammensetzung nach einem der vorstehenden Ansprüche, wobei das phosphorhaltige Flammschutzmittel der Formel zugehörig ist 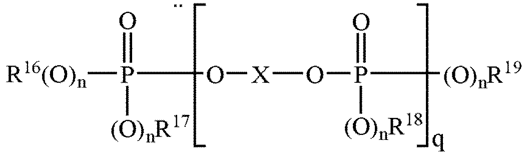 wobei
R¹⁶, R¹⁷, R¹⁸ und R¹⁹ jeweils unabhängig C₁₋₈-Alkyl, Cs-s-Cycloalkyl, C₆₋₂₀-Aryl oder C₇₋₁₂-Arylalkylen sind, jeweils optional durch C₁₋₁₂-Alkyl substituiert, und
X ein mono- oder polynuklearer aromatischer C₆₋₃₀-Rest oder ein linearer oder verzweigter aliphatischer C₂₋₃₀-Rest ist, der OH-substituiert sein kann und bis zu 8 Etherbindungen enthalten kann, vorausgesetzt, dass mindestens eines von R¹⁶, R¹⁷, R¹⁸, R¹⁹ und X aromatisch ist,
n jeweils unabhängig 0 oder 1 ist, und
q von 0,5 bis 30 ist, und
vorzugsweise wobei
jedes von R¹⁶, R¹⁷, R¹⁸ und R¹⁹ Phenyl ist,
X der Formel zugehörig ist 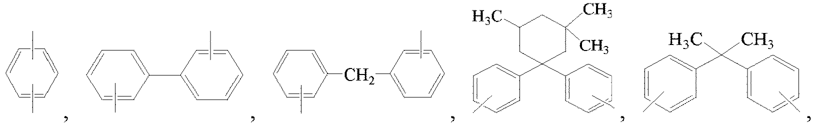 oder eine Kombination davon,
jedes n 1 ist, und
q 1 bis 5 ist.

7. Glasgefüllte Polycarbonatzusammensetzung nach einem der vorstehenden Ansprüche,
wobei das phosphorhaltige Flammschutzmittel der Formel zugehörig ist 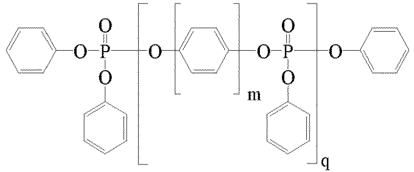
wobei m 1 oder 2 ist, und q 1 bis 5 ist.

8. Glasgefüllte Polycarbonatzusammensetzung nach einem der Ansprüche 1 bis 5, wobei das phosphorhaltige Flammschutzmittel ein Phosphazen ist von 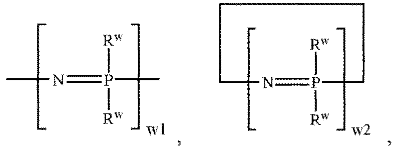
oder eine Kombination davon, wobei
w1 3 bis 10.000 ist,
w2 3 bis 25, vorzugsweise 3 bis 7 ist, und
jedes R^{w} unabhängig eine C₁₋₁₂-Alkyl-, eine C₂₋₁₂-Alkenyl-, eine C₁₋₁₂-Alkoxy-, eine C₆₋₁₂-Aryl-, eine C₆₋₁₂-Aryloxy- oder eine Polyoxy(C₁₋₆-alkylen)-Gruppe ist.

9. Glasgefüllte Polycarbonatzusammensetzung nach einem der Ansprüche 2 bis 8, wobei die Zusatzzusammensetzung vorhanden ist und ein Schlagmodifizierungsmittel, ein Verlaufmittel, ein Antioxidans, ein Wärmestabilisierungsmittel, ein Lichtschutzmittel, ein Ultraviolettlichtschutzmittel, einen ultraviolettabsorbierenden Zusatz, einen Weichmacher, ein Schmiermittel, ein Trennmittel, ein antistatisches Mittel, ein Antibeschlagmittel, ein antimikrobielles Mittel, ein Färbemittel, einen Oberflächenwirkungszusatz, einen Strahlenschutzmittel, ein Flammschutzmittel, das sich von dem phosphorhaltigen Flammschutzmittel unterscheidet, oder eine Kombination davon umfasst.

10. Glasgefüllte Polycarbonatzusammensetzung nach einem der Ansprüche 2 bis 9, umfassend zu 80 bis 90 Gew.-% das Poly(bisphenol-A-carbonat-bisphenol-A-phthalatester) als die Copolycarbonatkomponente, wobei das Gewichtsverhältnis von Carbonateinheiten zu Estereinheiten 75 : 25-85 : 15 beträgt;
zu 5 bis 15 Gew.-% die Glasfasern;
zu 0,1 bis 2,0 Gew.-% die Zusatzzusammensetzung,
das phosphorhaltige Flammschutzmittel, das in einer wirksamen Menge vorhanden ist, um 0,3 bis 0,7 Gew.-% zugesetzten Phosphor bereitzustellen, basierend auf dem Gesamtgewicht des phosphorhaltigen Flammschutzmittels;
optional zu 0,1 bis 0,97 Gew.-% das Antitropfmittel und
wobei jede Menge auf dem Gesamtgewicht der glasgefüllten Polycarbonatzusammensetzung basiert, das sich auf 100 Gew.-% summiert.

11. Glasgefüllte Polycarbonatzusammensetzung nach einem der Ansprüche 2 bis 9, umfassend zu 20 bis 40 Gew.-% das Hochtemperaturcopolycarbonat als die Hochtemperaturcopolycarbonatkomponente, wobei das Hochtemperaturcopolycarbonat Einheiten umfasst, die von 1,1-Bis(4-hydroxyphenyl)-3,3,5-trimethyl-cyclohexan, N-Phenylphenolphthaleinbisphenol oder einer Kombination davon abgeleitet sind;
zu 10 bis 20 Gew.-% das Poly(carbonatsiloxan);
zu 5 bis 50 Gew.-% ein Bisphenol-A-Homopolycarbonat als das Homopolycarbonat, das ein Massenmittel von 18.000-35.000 Gramm/Mol, vorzugsweise 20.000-25.000 Gramm/Mol, aufweist;
zu 10 bis 40 Gew.-% die Glasfasern;
das phosphorhaltige Flammschutzmittel, das in einer wirksamen Menge vorhanden ist, um 0,3 bis 0,7 Gew.-% zugesetzten Phosphor bereitzustellen, basierend auf dem Gesamtgewicht des phosphorhaltigen Flammschutzmittels; und
zu 0,1 bis 2,0 Gew.-% die Zusatzzusammensetzung;
optional zu 0,1 bis 0,97 Gew.-% das Antitropfmittel,
wobei jede Menge auf dem Gesamtgewicht der glasgefüllten Polycarbonatzusammensetzung basiert, das sich auf 100 Gew.-% summiert.

12. Glasgefüllte Polycarbonatzusammensetzung nach Anspruch 7 oder 8, umfassend
zu 30 bis 50 Gew.-% das Poly(bisphenol-A-carbonat-bisphenol-A-phthalatester) als die Hochtemperaturcopolycarbonatkomponente, wobei das Gewichtsverhältnis von Carbonateinheiten zu Estereinheiten 75 : 25-85 : 15 beträgt;
zu 10 bis 20 Gew.-% das Poly(carbonatsiloxan)
zu 5 bis 40 Gew.-% das Bisphenol-A-Homopolycarbonat, das ein Massenmittel von 18.000-35.000 Gramm/Mol, vorzugsweise 20.000-25.000 Gramm/Mol, aufweist, wie über Gelpermeationschromatographie unter Verwendung von Bisphenol-A-Homopolycarbonat-Standards gemessen;
zu 10 bis 40 Gew.-% die Glasfasern;
zu 0,1 bis 2,0 Gew.-% die Zusatzzusammensetzung; und
das phosphorhaltige Flammschutzmittel, das in einer wirksamen Menge vorhanden ist, um 0,3 bis 0,7 Gew.-% zugesetzten Phosphor bereitzustellen, basierend auf dem Gesamtgewicht des phosphorhaltigen Flammschutzmittels;
optional zu 0,1 bis 0,97 Gew.-% das Antitropfmittel,
wobei jede Menge auf dem Gesamtgewicht der glasgefüllten Polycarbonatzusammensetzung basiert, das sich auf 100 Gew.-% summiert.

13. Glasgefüllte Polycarbonatzusammensetzung nach Anspruch 9, umfassend
zu 30 bis 50 Gew.-% das Poly(bisphenol-A-carbonat-bisphenol-A-phthalatester) als die Hochtemperaturcopolycarbonatkomponente, wobei das Gewichtsverhältnis von Carbonateinheiten zu Estereinheiten 75 : 25-85 : 15 beträgt;
zu 10 bis 20 Gew.-% das Poly(carbonatsiloxan);
zu 5 Gew.-% bis weniger als 30 Gew.-% das Bisphenol-A-Homopolycarbonat als das Homopolycarbonat, das ein Massenmittel von 18.000-35.000 Gramm/Mol, vorzugsweise 20.000-25.000 Gramms/Mol, aufweist, wie über Gelpermeationschromatographie unter Verwendung von Bisphenol-A-Homopolycarbonat-Standards gemessen;
zu 10 bis 40 Gew.-% die Glasfasern;
zu 0,1 bis 2,0 Gew.-% die Zusatzzusammensetzung; und
das phosphorhaltige Flammschutzmittel, das in einer wirksamen Menge vorhanden ist, um 0,3 bis 0,7 Gew.-% zugesetzten Phosphor bereitzustellen, basierend auf dem Gesamtgewicht des phosphorhaltigen Flammschutzmittels;
optional zu 0,1 bis 0,97 Gew.-% das Antitropfmittel,
wobei jede Menge auf dem Gesamtgewicht der glasgefüllten Polycarbonatzusammensetzung basiert, das sich auf 100 Gew.-% summiert.

14. Erzeugnis nach einem der vorstehenden Ansprüche, wobei das Erzeugnis ein extrudiertes Erzeugnis, ein geformtes Erzeugnis, ein pultrudiertes Erzeugnis, ein thermoausgebildetes Erzeugnis, ein geschäumtes Erzeugnis, eine Schicht eines mehrschichtigen Erzeugnisses, ein Substrat für ein beschichtetes Erzeugnis oder ein Substrat für ein metallisiertes Erzeugnis ist, vorzugsweise wobei das Erzeugnis ein geformtes Erzeugnis, vorzugsweise ein geformtes Gehäuse, mehr bevorzugt ein Gehäuse einer elektrische Schaltung ist.

15. Verfahren zum Ausbilden des Erzeugnisses nach einem der vorstehenden Ansprüche, umfassend ein Formen, ein Gießen oder ein Extrudieren der Zusammensetzung, um das Erzeugnis bereitzustellen.

## Revendications

1. Composition de polycarbonate chargé de verre, comprenant
5 à 95 % en poids d'un composant de copolycarbonate à haute température ayant une température de transition vitreuse de 170°C ou plus, telle que déterminée par la norme ASTM D3418 avec une vitesse de chauffage de 20°C/min ;
un ignifuge contenant du phosphore présent en une quantité efficace pour produire environ 0,2 à 0,9 % en poids de phosphore ajouté, par rapport au poids total de l'ignifuge contenant du phosphore ;
5 à 45 % en poids de fibres de verre ;
et
dans laquelle chaque quantité est par rapport au poids total de la composition de polycarbonate chargé de verre, qui totalise 100 % en poids
dans laquelle un échantillon moulé de la composition de polycarbonate chargé de verre a
une température de ramollissement de Vicat supérieure ou égale à 135°C telle que mesurée selon la norme ISO 306, et
un indice de résistance au feu de V0 tel que mesuré selon la norme UL-94 à une épaisseur de 1,0 millimètre, de préférence 0,8 millimètre ou de préférence 0,4 millimètre.

2. Composition de polycarbonate chargé de verre selon la revendication 1, comprenant :
5 à 50 % en poids d'un homopolycarbonate ayant un poids moléculaire moyen en poids allant de 15 000 à 40 000 grammes/mole, tel que mesuré par chromatographie par perméation de gel en utilisant des références d'homopolycarbonate de bisphénol A ; et/ou
5 à 45 % en poids d'un polycarbonate-siloxane ; et/ou
0,1 à 0,97 % en poids d'un agent anti-goutte ; et/ou
0,1 à 10 % en poids d'une composition additive.

3. Composition de polycarbonate chargé de verre selon la revendication 1 ou la revendication 2, dans laquelle le composant de copolycarbonate à haute température comprend
un poly(carbonate-ester phtalate de bisphénol) comprenant 1 à 50 % en poids de motifs carbonates aromatiques et 50 à 99 % en poids de motifs esters phtalate de bisphénol, chacun par rapport à la somme du poids des motifs carbonates et des motifs esters phtalate de bisphénol; ou
un copolycarbonate à haute température comprenant des motifs carbonates aromatiques à haute température dérivés du 1,1-bis(4-hydroxyphényl)-3,3,5-triméthylcyclohexane, N-phényl phénolphtaléine bisphénol, 4,4'-(1-phényléthylidène)bisphénol, 4,4'-(3,3-diméthyl-2,2-dihydro-1H-indène-1,1-diyl)diphénol, 1,1-bis(4-hydroxyphényl)cyclododécane, 3,8-dihydroxy-5a,10b-diphényl-coumarano-2',3',2,3-coumarane, ou d'une combinaison de ceux-ci, de préférence du 1,1-bis(4-hydroxyphényl)-3,3,5-triméthylcyclohexane, N-phényl phénolphtaléine bisphénol, ou d'une combinaison de ceux-ci, et éventuellement, des motifs carbonates aromatiques à basse température, de préférence des motifs carbonates de bisphénol A ;
ou une combinaison de ceux-ci.

4. Composition de polycarbonate chargé de verre selon l'une quelconque des revendications précédentes, dans laquelle le composant de copolycarbonate à haute température comprend du poly(carbonate-ester phtalate de bisphénol )ayant la formule 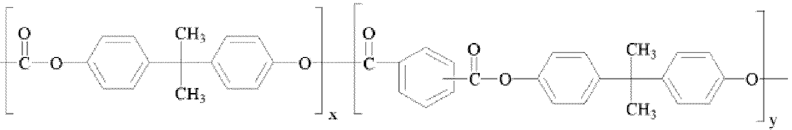 dans laquelle
le rapport en poids des motifs carbonates x aux motifs esters y est de 10 : 90 à 45 : 55, de préférence 75 : 25 à 85 : 15, et
les motifs esters ont un rapport molaire de l'isophtalate au téréphtalate de 98 : 2 à 88 : 12.

5. Composition de polycarbonate chargé de verre selon l'une quelconque des revendications précédentes, dans laquelle les motifs carbonates à basse température du copolycarbonate à haute température sont présents et comprennent des motifs carbonates de bisphénol A.

6. Composition de polycarbonate chargé de verre selon l'une quelconque des revendications précédentes, dans laquelle l'ignifuge contenant du phosphore est de formule 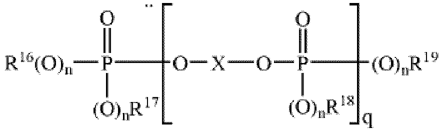 dans laquelle
R¹⁶, R¹⁷, R¹⁸ et R¹⁹ sont chacun indépendamment un alkyle en C₁₋₈, cycloalkyle en C₅₋₆, aryle en C₆₋₂₀, ou arylalkylène en C₇₋₁₂, chacun éventuellement substitué par un alkyle en C₁₋₁₂, et
X est une fraction aromatique mono- ou poly-nucléaire en C₆₋₃₀ ou un radical aliphatique linéaire ou ramifié en C₂₋₃₀, qui peut être substitué par OH et peut contenir jusqu'à 8 liaisons éther, à condition qu'au moins un élément parmi R¹⁶, R¹⁷, R¹⁸, R¹⁹ et X soit aromatique,
n vaut chacun indépendamment 0 ou 1, et
q vaut de 0,5 à 30, et
de préférence dans laquelle
chacun des R¹⁶, R¹⁷, R¹⁸ et R¹⁹ est un phényle,
X est de formule 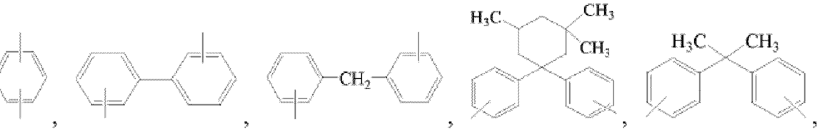
ou une combinaison de celles-ci,
chaque n vaut 1, et
q vaut 1 à 5.

7. Composition de polycarbonate chargé de verre selon l'une quelconque des revendications précédentes, dans laquelle l'ignifuge contenant du phosphore est de formule 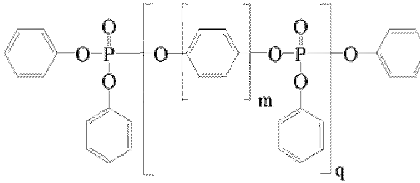 dans laquelle m vaut 1 ou 2, et q vaut 1 à 5.

8. Composition de polycarbonate chargé de verre selon l'une quelconque des revendications 1 à 5, dans laquelle l'ignifuge contenant du phosphore est un phosphazène de 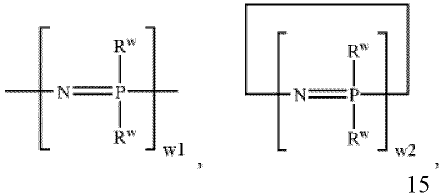
ou d'une combinaison de ceux-ci, dans lesquels
w1 vaut 3 à 10 000,
w2 vaut 3 à 25, de préférence 3 à 7, et
chaque R^{w} est indépendamment un groupe alkyle en C₁₋₁₂, alcényle en C₂₋₁₂, alcoxy en C₁₋₁₂, aryle en C₆₋₁₂, aryloxy en C₆₋₁₂, ou polyoxy(alkylène en C₁₋₆).

9. Composition de polycarbonate chargé de verre selon l'une quelconque des revendications 2 à 8, dans laquelle la composition additive est présente et comprend un modificateur d'impact, un modificateur d'écoulement, un antioxydant, un stabilisant thermique, un photostabilisant, un stabilisant de lumière ultraviolette, un additif absorbant les ultraviolets, un plastifiant, un lubrifiant, un agent de démoulage, un agent antistatique, un agent anti-buée, un agent antimicrobien, un colorant, un additif à effet de surface, un stabilisant de rayonnement, un ignifuge différent de l'ignifuge contenant du phosphore, ou une combinaison de ceux-ci.

10. Composition de polycarbonate chargé de verre selon l'une quelconque des revendications 2 à 9, comprenant
80 à 90 % en poids du poly(carbonate de bisphénol A - ester phtalate de bisphénol A ) en tant que composant de copolycarbonate, dans lequel le rapport en poids des motifs carbonates aux motifs esters est de 75 : 25 à 85 : 15 ;
5 à 15 % en poids des fibres de verre ;
0,1 à 2,0 % en poids de la composition additive,
l'ignifuge contenant du phosphore est présent en une quantité efficace pour produire 0,3 à 0,7 % en poids de phosphore ajouté, par rapport au poids total de l'ignifuge contenant du phosphore ;
éventuellement, 0,1 à 0,97 % en poids de l'agent anti-goutte, et
dans laquelle chaque quantité est par rapport au poids total de la composition de polycarbonate chargé de verre, qui totalise 100 % en poids.

11. Composition de polycarbonate chargé de verre selon l'une quelconque des revendications 2 à 9, comprenant
20 à 40 % en poids du copolycarbonate à haute température en tant que composant de copolycarbonate à haute température, dans lequel le copolycarbonate à haute température comprend des motifs dérivés du 1,1-bis(4-hydroxyphényl)-3,3,5-triméthylcyclohexane, N-phényl phénolphtaléine bisphénol, ou d'une combinaison de ceux-ci ;
10 à 20 % en poids du polycarbonate-siloxane ;
5 à 50 % en poids d'homopolycarbonate de bisphénol A en tant qu'homopolycarbonate, ayant un poids moléculaire moyen en poids allant de 18 000 à 35 000 grammes/mole, de préférence 20 000 à 25 000 grammes/mole ;
10 à 40 % en poids des fibres de verre ;
l'ignifuge contenant du phosphore est présent en une quantité efficace pour produire 0,3 à 0,7 % en poids de phosphore ajouté, par rapport au poids total de l'ignifuge contenant du phosphore ; et
0,1 à 2,0 % en poids de la composition additive,
éventuellement, 0,1 à 0,97 % en poids de l'agent anti-goutte, et
dans laquelle chaque quantité est par rapport au poids total de la composition de polycarbonate chargé de verre, qui totalise 100 % en poids.

12. Composition de polycarbonate chargé de verre selon la revendication 7 ou la revendication 8, comprenant
30 à 50 % en poids du poly(carbonate de bisphénol A - ester phtalate de bisphénol A ) en tant que composant de copolycarbonate à haute température, dans lequel le rapport en poids des motifs carbonates aux motifs esters est de 75 : 25 à 85 : 15 ;
10 à 20 % en poids du polycarbonate-siloxane ;
5 à 40 % en poids d'homopolycarbonate de bisphénol A ayant un poids moléculaire moyen en poids allant de 18 000 à 35 000 grammes/mole, de préférence 20 000 à 25 000 grammes/mole, tel que mesuré par chromatographie par perméation de gel en utilisant des références d'homopolycarbonate de bisphénol A ;
10 à 40 % en poids des fibres de verre ;
0,1 à 2,0 % en poids de la composition additive ; et
l'ignifuge contenant du phosphore est présent en une quantité efficace pour produire 0,3 à 0,7 % en poids de phosphore ajouté, par rapport au poids total de l'ignifuge contenant du phosphore ;
éventuellement, 0,1 à 0,97 % en poids de l'agent anti-goutte,
dans laquelle chaque quantité est par rapport au poids total de la composition de polycarbonate chargé de verre, qui totalise 100 % en poids.

13. Composition de polycarbonate chargé de verre selon la revendication 9, comprenant
30 à 50 % en poids du poly(carbonate de bisphénol A - ester phtalate de bisphénol A ) en tant que composant de copolycarbonate à haute température, dans lequel le rapport en poids des motifs carbonates aux motifs esters est de 75 : 25 à 85 : 15 ;
10 à 20 % en poids du polycarbonate-siloxane ;
5 % en poids jusqu'à moins de 30 % en poids d'homopolycarbonate de bisphénol A en tant qu'homopolycarbonate, ayant un poids moléculaire moyen en poids allant de 18 000 à 35 000 grammes/mole, de préférence 20 000 à 25 000 grammes/mole, tel que mesuré par chromatographie par perméation de gel en utilisant des références d'homopolycarbonate de bisphénol A ;
10 à 40 % en poids des fibres de verre ;
0,1 à 2,0 % en poids de la composition additive ; et
l'ignifuge contenant du phosphore est présent en une quantité efficace pour produire 0,3 à 0,7 % en poids de phosphore ajouté, par rapport au poids total de l'ignifuge contenant du phosphore ;
éventuellement, 0,1 à 0,97 % en poids de l'agent anti-goutte,
dans laquelle chaque quantité est par rapport au poids total de la composition de polycarbonate chargé de verre, qui totalise 100 % en poids.

14. Article selon l'une quelconque des revendications précédentes, dans lequel l'article est un article extrudé, un article moulé, un article pultrudé, un article thermoformé, un article en mousse, une couche d'un article multicouche, un substrat pour un article revêtu, ou un substrat pour un article métallisé, de préférence dans lequel l'article est un article moulé, de préférence un boîtier moulé, plus préférentiellement un boîtier de circuit électrique.

15. Méthode de formation de l'article selon l'une quelconque des revendications précédentes, comprenant le moulage, la coulée ou l'extrusion de la composition pour produire l'article.
